# NOUVEAU FASCICULE DE BREVET EUROPEEN

(11) **EP 1 692 423 B2**
(45) Date de publication et mention de la décision concernant l'opposition: **16.12.2015**
(45) Mention de la délivrance du brevet: 08.04.2009
(21) Numéro de dépôt: 04805515.6
(22) Date de dépôt: 23.11.2004
(51) Int. Cl.: F16L 15/04

(54) **REALISATION, PAR EXPANSION PLASTIQUE, D'UN JOINT TUBULAIRE ETANCHE AVEC SUREPAISSEUR(S) DE MATIERE LOCALE(S) ET INITIALE(S)**
VERFAHREN ZUR HERSTELLUNG EINER HERMETISCHEN RÖHRENVERBINDUNG MIT LOKALER (LOKALEN) UND ANFÄNGLICHER (ANFÄNGLICHEN) ZUSATZDICKE(N) MITTELS PLASTISCHER EXPANSION
METHOD OF PRODUCING A HERMETIC TUBULAR JOINT COMPRISING LOCAL AND INITIAL ADDED THICKNESS(ES), BY MEANS OF PLASTIC EXPANSION

(30) Priorité: 28.11.2003 FR 0314037
(43) Date de publication de la demande: 23.08.2006
(73) Titulaire: VALLOUREC OIL AND GAS FRANCE, 59620 Aulnoye-Aymeries (FR)
(72) Inventeur: DUBEDOUT, Laurent, 9,rue des Glatignies, F-59300 Valenciennes (FR); DUQUESNE, Benoît, Résidence le Jardin du Théâtre, F-59300 Valenciennes (FR); VERGER, Eric, F-59144 Gommegnies (FR)
(74) Mandataire: Plaçais, Jean Yves
(86) Numéro de dépôt international: PCT/FR2004/002986
(87) Numéro de publication internationale: WO 2005/064219

(56) Documents cités:
- WO-A-03/060370
- WO-A1-00/66928
- WO-A1-02/01102
- WO-A1-85/02651
- WO-A1-02/095181
- US-A- 4 611 838
- US-A- 5 154 452
- US-A- 5 765 836
- US-A- 6 047 997
- US-A1- 2002 021 006
- US-A1- 2002 163 192
- US-B1- 6 322 110

## Description

L'invention concerne le domaine des joints tubulaires, utilisés, notamment, dans les puits, tels que les puits d'hydrocarbures et les puits géothermiques.

Ces joints sont généralement utilisés pour connecter entre eux des tubes de grande longueur ou des tubes de grande longueur et des manchons, afin de permettre la constitution de colonnes de tubes de cuvelage (ou "casings") ou de production (ou "tubings").

Par ailleurs, ces joints doivent supporter d'importantes contraintes de flexion, de traction, de compression, et parfois de torsion, ainsi que d'importants écarts de pression entre l'intérieur et l'extérieur. En outre, ces joints doivent parfois être également étanches aux gaz.
Pour ces raisons, les joints sont fréquemment de type fileté et les manchons et tubes sont généralement en acier ou en alliage à hautes limites d'élasticité (obtenues éventuellement par traitements thermiques). Dans le cas de joints filetés, l'étanchéité aux gaz est le plus souvent assurée par des portées d'étanchéité avec contact serrant de type "métal sur métal".

Afin de réduire l'encombrement initial des tubes, ainsi qu'éventuellement permettre le forage de puits de diamètre uniforme, il a été proposé, notamment dans les documents US 6,604,763 et WO 03/071086, de les expanser diamétralement à force in situ à l'aide d'un outil d'expansion appelé "boulet". Des joints filetés étanches, comme par exemple ceux décrits dans le document EP 0488912, peuvent supporter une telle expansion mais perdent leurs caractéristiques d'étanchéité lors de l'expansion, le nez en extrémité de l'élément mâle qui porte une surface d'étanchéité mâle plongeant vers l'axe lors de l'expansion (effet "banane"), ce qui rompt l'étanchéité.

Afin de résoudre ce problème, la Demanderesse a proposé dans le document WO 02/01102 un joint tubulaire fileté dont le nez mâle est muni en extrémité d'un doigt annulaire encastré dans une rainure femelle, la rainure formant un support pour le doigt et empêchant la plongée du doigt mâle vers l'axe, lors de l'expansion.

Un tel joint fileté ne présente toutefois pas de caractéristiques d'étanchéité suffisamment élevées lorsque le taux d'expansion est supérieur à 10%. En effet, les déformations induites par le boulet d'expansion déplacent, voire même suppriment, les contacts entre le doigt mâle et la rainure, ce qui déplace, en les diminuant, voire même en les supprimant, les contacts serrants entre surfaces d'étanchéité.

Par "contact serrant" on entend ici un contact développant une pression de contact entre deux surfaces en contact. Plus la pression de contact est élevée, plus la pression du fluide que peut supporter le joint sans que l'étanchéité soit rompue peut être élevée. Outre la pression du fluide, laquelle peut s'exercer à l'intérieur ou à l'extérieur du joint fileté, des charges axiales de traction ou de compression peuvent modifier la pression de contact, et par conséquent les caractéristiques d'étanchéité. En d'autres termes, en raison du mode de réalisation de ces joints leur étanchéité peut ne pas être identique vis-à-vis de la pression interne ou de la pression externe, ni être stable en fonction du chargement.

Afin d'améliorer la situation, la Demanderesse a proposé, dans le document brevet FR 2 844 331 (voir également FR 2 844 330 et WO 03/060370), un joint tubulaire d'étanchéité métal/métal muni d'un doigt (ou lèvre) annulaire, décrit dans le document WO 02/01102 et présentant des épaulements mâles et femelles inclinés, fortement serrés l'un contre l'autre après expansion, l'épaulement sur l'élément femelle étant constitué par le flanc d'une gorge, et l'épaulement sur l'élément mâle pouvant préexister ou résulter de l'impression de l'élément mâle au fond de la gorge lors de l'expansion.

Ce joint a été conçu pour être étanche à des taux d'expansion élevés, typiquement supérieurs à 10%, mais ses caractéristiques d'étanchéité peuvent se révéler insuffisantes lorsque les caractéristiques d'étanchéité exigées dans les divers modes de chargement sont élevées.

L'invention a donc pour but d'améliorer la situation, notamment en terme de stabilité de l'étanchéité pour les divers modes de chargement, et plus particulièrement en présence de taux d'expansion très élevés, typiquement supérieurs à 10%.

Elle propose à cet effet un joint tubulaire expansible comprenant :
* d'une part, un premier élément tubulaire comportant une première partie, munie d'un filetage mâle, et une seconde partie prolongeant ladite première partie et comprenant i) une première surface externe, ii) une première lèvre annulaire ayant une première surface de butée axiale et une première surface interne et délimitée par ladite première surface externe sur une partie de la longueur axiale de celle-ci, et iii) une deuxième surface de butée;
* d'autre part, un second élément tubulaire comportant i) un filetage femelle, homologue du filetage mâle et vissé sur celui-ci, ii) une seconde lèvre annulaire, ayant une troisième surface de butée, une deuxième surface externe, placée en regard de ladite première surface interne, et une deuxième surface interne, iii) une quatrième surface de butée axiale, et iv) une troisième surface interne s'étendant entre ladite quatrième surface de butée axiale et ledit filetage femelle et définissant avec lesdites deuxième surface externe et quatrième surface de butée un logement annulaire homologue de ladite première lèvre.

Ce joint se caractérise par le fait que, d'une première part, le premier élément tubulaire comprend une surépaisseur annulaire locale choisie au niveau d'une quatrième surface interne qui prolonge la deuxième surface de butée, d'une deuxième part, le second élément tubulaire comprend en un endroit choisi de sa troisième surface interne une gorge annulaire interne placée sensiblement au niveau de la première surface externe et de la surépaisseur annulaire, et d'une troisième part, les premier et second éléments tubulaires sont conformés de sorte que la première lèvre est logée dans le logement annulaire, et la deuxième surface de butée s'appuie contre la troisième surface de butée et/ou la première surface de butée s'appuie contre la quatrième surface de butée, de manière à permettre, lors d'une expansion diamétrale dans le domaine de la déformation plastique effectuée ultérieurement sur le joint tubulaire expansible, la formation au niveau de la première surface externe d'un épaulement annulaire présentant une partie au moins de la conformation de la gorge et en contact serrant et étanche avec celle-ci.

L'existence de la surépaisseur et la localisation de la gorge au niveau de la surépaisseur, après vissage, permet d'imprimer dans la gorge, de façon efficace, la première surface externe de la première lèvre lors de l'expansion. L'épaulement présente ainsi une conformation choisie. De la sorte, on assure une étanchéité de qualité par contact serrant (et étanche) intense entre l'épaulement annulaire du premier élément tubulaire et la gorge annulaire du second élément tubulaire, y compris pour des taux d'expansion diamétrale élevés (jusqu'à environ 35%).

Le joint tubulaire expansible selon l'invention peut comporter d'autres caractéristiques qui pourront être prises séparément ou en combinaison, et notamment :
- la courbure de la première lèvre en direction de l'axe longitudinal du joint permet, lors de l'expansion, de définir un autre contact serrant et étanche entre une partie d'extrémité interne de la première lèvre et la deuxième surface externe,
- le premier élément tubulaire peut présenter une surépaisseur annulaire locale qui croît en direction de la deuxième surface de butée, par exemple sensiblement continûment selon une pente comprise entre environ 5° et environ 30°, et de préférence entre environ 10° et environ 20°,
- le premier élément tubulaire peut présenter au niveau de sa première partie, sur sa surface interne opposée au filetage mâle, un rétreint conique dans lequel est défini un décrochement annulaire. Ce rétreint peut par exemple croître initialement sensiblement continûment selon une pente comprise entre environ 2° et environ 20°,
- la surépaisseur maximale de la seconde partie peut être, par exemple, initialement inférieure à une valeur choisie en fonction du diamètre d'un tampon appelé "drift",
- la deuxième surface interne de la seconde lèvre peut présenter initialement une surépaisseur annulaire locale choisie dans une zone adjacente à la troisième surface de butée, afin d'augmenter la déformation de la première lèvre en direction de la gorge lors de l'expansion,
- la surépaisseur de la seconde lèvre peut être initialement inférieure à celle du premier élément tubulaire,
- la surépaisseur de la seconde lèvre peut être initialement inférieure à une valeur choisie en fonction du diamètre d'un tampon appelé "drift",
- le rapport entre l'extension de la seconde lèvre dans la direction longitudinale et l'extension du logement dans la direction transverse peut être initialement compris entre environ 1 et environ 3, et de préférence entre environ 1,2 et environ 1,6,
- la gorge peut comporter initialement au moins deux portions curvilignes, éventuellement séparées par une partie centrale sensiblement cylindrique. Dans ce cas, les portions peuvent présenter initialement des rayons de courbure sensiblement identiques, par exemple compris entre environ 2 mm et environ 20 mm. Lorsque l'un au moins des éléments tubulaires appartient à un tube de grande longueur, la gorge présente initialement une profondeur radiale dont la valeur maximale est choisie de préférence de sorte que la section de matière en fond de gorge soit supérieure au produit de la plus faible section d'une partie courante de ce ou ces tubes par l'efficacité du joint en traction. On entend par "partie courante d'un tube" la partie centrale éloignée de ses deux extrémités et de diamètre sensiblement constant,
- les filetages mâle et femelle sont préférentiellement choisis parmi les filetages de type conique et cylindrique, et sont chacun formés sur au moins une portion d'élément tubulaire,
- la première lèvre peut être mise en compression axiale dans le domaine des déformations élastiques lors du vissage,
- pendant le vissage, la première surface de butée peut commencer par s'appuyer contre la quatrième surface de butée, puis la deuxième surface de butée s'appuie contre la troisième surface de butée,
- les deuxième et troisième surfaces de butée peuvent présenter initialement des surfaces coniques respectivement convexe et concave, d'inclinaisons sensiblement identiques par rapport à un plan transverse à la direction longitudinale, de manière à permettre un contact serrant et étanche entre la première surface interne et la deuxième surface externe après le vissage (et de préférence une fois que la deuxième surface de butée s'appuie sur la troisième surface de butée) et avant l'expansion. Dans ce cas, les inclinaisons sont par exemple initialement comprises entre environ +5° et environ +30°,
- les filetages mâle et femelle peuvent comporter des filets munis d'un flanc porteur présentant un angle négatif compris entre environ - 3 ° et environ - 15°,
- les filetages mâle et femelle peuvent comporter des filets munis d'un flanc d'engagement présentant un angle positif compris entre environ + 10° et environ + 30°. Dans ce cas, les filetages mâle et femelle peuvent présenter après vissage et avant expansion un jeu axial entre leurs flancs d'engagement compris entre environ 0,05 mm et environ 0,3 mm,
- le premier élément tubulaire peut présenter initialement au niveau de sa première surface externe et avant sa première partie, un chanfrein conique définissant un décrochement annulaire local vers l'intérieur, lorsque l'on se déplace vers la première partie. Dans ce cas, le chanfrein peut présenter une pente sensiblement continue par rapport à la direction longitudinale et comprise entre environ 8° et environ 12°,
- la première surface interne de la première lèvre peut être initialement inclinée par rapport à la direction longitudinale d'un angle compris, par exemple, entre environ 0,1 ° et environ 15°,
- le second élément tubulaire peut faire partie d'un tube de grande longueur ou bien d'un manchon de raccordement sensiblement symétrique de type femelle/femelle (le premier élément tubulaire appartenant alors à l'extrémité d'un tube de grande longueur). Dans le cas d'un manchon, celui-ci peut comporter une partie centrale prolongée de part et d'autre par deux seconds éléments tubulaires et initialement munie, sur une surface externe, d'une zone présentant une sous-épaisseur choisie de sorte que la section initiale du manchon au niveau de cette zone soit supérieure ou égale au produit de la section d'une partie courante des tubes, aux extrémités desquels sont formés les premiers éléments tubulaires, par l'efficacité du joint.

L'invention concerne également un procédé de réalisation d'un joint tubulaire expansé à partir d'un joint tubulaire expansible du type de celui présenté ci-avant.

Dans ce procédé, l'expansion peut définir un autre contact serrant et étanche entre une partie d'extrémité interne de la première lèvre et la deuxième surface externe.

Par ailleurs, le vissage peut tout d'abord contraindre la première surface de butée à s'appuyer contre la quatrième surface de butée de manière à provoquer une mise en compression axiale de la première lèvre dans le domaine des déformations élastiques.

En outre, on peut effectuer le vissage jusqu'à ce que la première surface de butée s'appuie contre la quatrième surface de butée, puis que la deuxième surface de butée s'appuie contre la troisième surface de butée.

Un tel procédé est particulièrement bien adapté, bien que de façon non limitative, à l'expansion radiale du joint selon un taux d'expansion au moins égal à 10%.

D'autres caractéristiques et avantages de l'invention apparaîtront à l'examen de la description détaillée ci-après, et des dessins annexés, sur lesquels :
- la figure 1 illustre de façon schématique, dans une vue en coupe longitudinale, une partie d'un exemple de réalisation d'un joint fileté expansible selon l'invention,
- la figure 2 illustre de façon schématique, dans une vue en coupe longitudinale, une partie d'un filetage femelle conique et du filetage mâle conique homologue avant vissage et expansion,
- la figure 3 illustre de façon schématique, dans une vue en coupe longitudinale, une partie de l'extrémité mâle du premier tube du joint fileté expansible de la figure 1,
- la figure 4 illustre de façon schématique, dans une vue en coupe longitudinale, une partie de l'extrémité femelle du second tube du joint fileté expansible de la figure 1,
- la figure 5 illustre de façon schématique, dans une vue en coupe longitudinale, les forces générées sur les extrémités mâle et femelle des tubes des figures 3 et 4 pendant la première étape de vissage,
- la figure 6 illustre de façon schématique, dans une vue en coupe longitudinale, les forces générées sur les extrémités mâle et femelle des tubes des figures 3 et 4 pendant la seconde étape de vissage,
- la figure 7 illustre de façon schématique, dans une vue en coupe longitudinale, les forces générées sur les extrémités mâle et femelle des tubes des figures 3 et 4 pendant l'étape d'expansion par déformation plastique,
- la figure 8 illustre de façon schématique, dans une vue en coupe longitudinale, les déformations subies par les extrémités mâle et femelle des tubes des figures 3 et 4 après l'étape d'expansion,
- la figure 9 illustre de façon schématique, dans une vue en coupe longitudinale, une partie d'un exemple de réalisation d'un assemblage de deux joints filetés expansibles selon l'invention, disposés symétriquement,
- la figure 10 illustre de façon schématique, dans une vue en coupe longitudinale, une partie d'un autre exemple de réalisation d'extrémité mâle d'un premier tube d'un joint fileté expansible selon l'invention,
- la figure 11 illustre de façon schématique, dans une vue en coupe longitudinale, une partie d'un autre exemple de réalisation d'extrémité femelle d'un second tube d'un joint fileté expansible selon l'invention, et
- la figure 12 illustre de façon schématique, dans une vue en coupe longitudinale, les positions relatives des extrémités mâle et femelle des tubes des figures 10 et 11 après la phase de vissage.

L'invention concerne un joint tubulaire fileté pouvant être notamment utilisé dans un puits d'hydrocarbures ou dans un puits similaire tel qu'un puits géothermique, et le procédé de réalisation associé.

Comme indiqué dans l'introduction, unjointtubulaire fileté selon l'invention peut permettre de constituer des colonnes de tubes de cuvelage ou de production, par assemblage de tubes métalliques de grande longueur entre eux ou bien de tubes de grande longueur et de manchons.

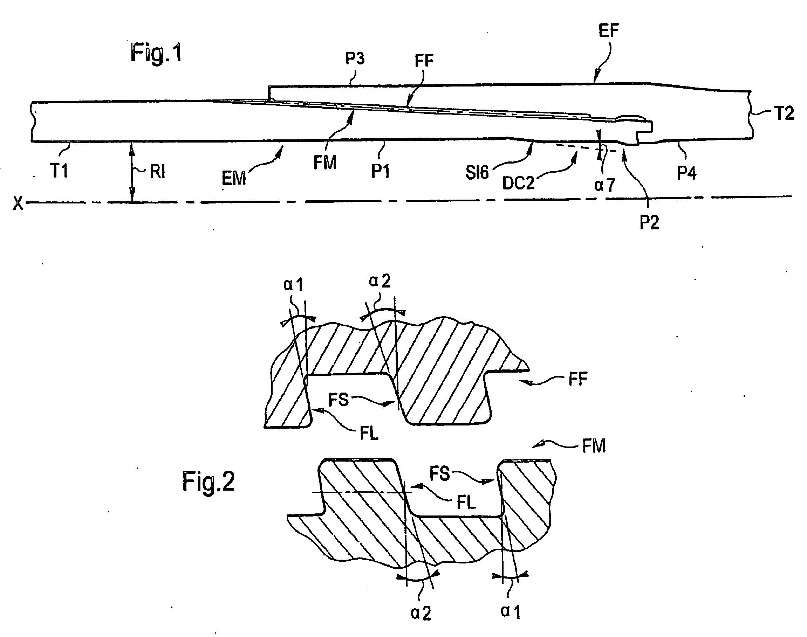

On se réfère tout d'abord aux figures 1 à 8 pour décrire un premier exemple de réalisation d'un joint tubulaire selon l'invention. Dans cet exemple, comme cela est partiellement illustré sur la figure 1, le joint permet de connecter deux tubes T1 et T2, d'axe de révolution XX et de grande longueur, c'est-à-dire de plusieurs mètres de longueur, et plus précisément l'extrémité de type mâle EM (ou élément tubulaire mâle) d'un premier tube T1 et l'extrémité de type femelle EF (ou élément tubulaire femelle) d'un second tube T2. Dans le mode de réalisation illustré, les tubes T1 et T2 présentent par exemple une partie courante dont le diamètre extérieur initial est égal à environ 193,68 mm (ou 7" 5/8). La partie courante d'un tube est la partie centrale éloignée de ses deux extrémités et de diamètre sensiblement constant.

Comme cela est illustré sur la figure 1, l'extrémité mâle EM d'un tube T1 comporte deux parties P 1 et P2. La première partie P 1 prolonge la partie centrale du tube T1 et est pourvue d'un filetage mâle externe FM, de préférence de type conique, mais il pourrait être également de type cylindrique.

Par exemple, comme illustré sur la figure 2 on prévoit un filetage conique dont la conicité ΔD/D, où D est le diamètre, est de 10%. Par ailleurs, le jeu axial (ou longitudinal) entre les filets est initialement suffisamment important pour leur offrir une certaine liberté de déplacement lors de l'expansion diamétrale, sur laquelle on reviendra plus loin. Par exemple, le jeu axial entre les flancs d'engagement (ou "flanc stabbing") FS des filets des filetages mâle FM et femelle FF est compris entre environ 0,05 mm et environ 0,3 mm.

En outre, afin d'assurer une bonne tenue en traction, mais surtout en compression, et par conséquent de diminuer les risques de désengagement ou dégrainage des filets mâle et femelle avant, pendant et après l'expansion, le flanc porteur (ou "flanc loading") FL des filets est par exemple incliné par rapport à la direction radiale d'un angle négatif α1 compris entre environ - 3° et environ - 15° et plus préférentiellement égal à environ - 10°, tandis que le flanc d'engagement FS des filets est par exemple incliné par rapport à la direction radiale d'un angle positif α2 compris entre environ + 10° et environ + 30°, et plus préférentiellement égal à environ + 15°.

L'angle négatif α1 permet d'éviter le désengagement ou dégrainage des filets en prise, notamment sous traction. Par ailleurs, plus l'angle positif α2 est grand, plus l'engagement des filets est facile, mais plus la tenue à la compression est dégradée.

Il est important de noter que les filetages mâle FM et femelle FF peuvent être chacun formés sur au moins une portion d'élément tubulaire EM, EF. En d'autres termes, ils peuvent être réalisés en une ou plusieurs parties. Lorsqu'ils sont constitués de deux parties celles-ci peuvent être éventuellement formées sur deux surfaces radialement distinctes ou alternativement sur une même surface.

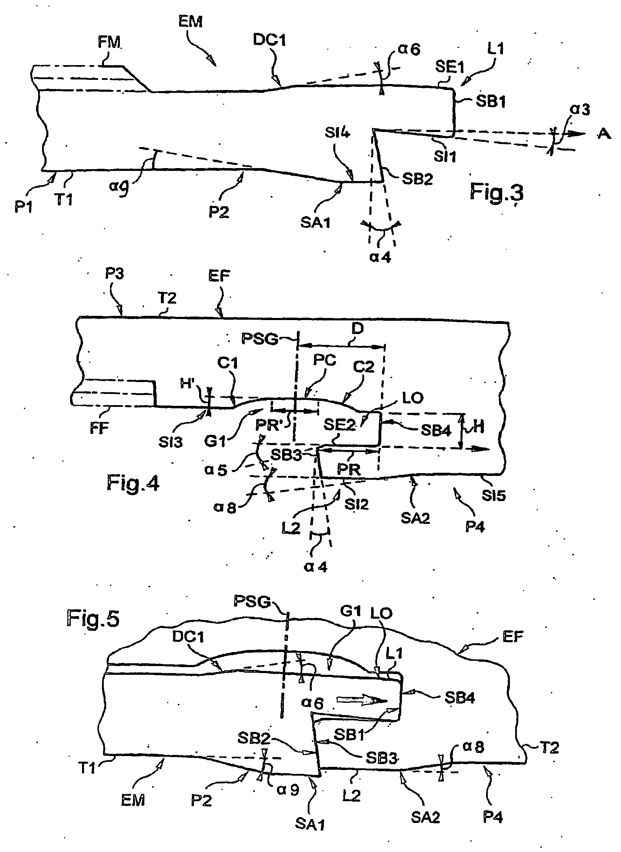

La seconde partie P2 prolonge la première partie P 1 à l'extrémité du tube T1. Elle comprend tout d'abord, comme illustré sur la figure 3, une première lèvre annulaire (ou doigt annulaire) L1 comprenant une première surface de butée axiale SB1, initialement sensiblement plane et perpendiculaire à la direction longitudinale A du tube T1 (parallèle à XX), une première surface interne SI1, prolongeant initialement de façon sensiblement perpendiculaire la première surface de butée axiale SB 1 en direction de la première partie P1 et orientée vers l'intérieur du tube T1(c'est-à-dire du côté opposé au filetage mâle FM), et une portion d'une première surface externe SE1, prolongeant également la première surface de butée axiale SB 1 en direction de la première partie P 1 et orientée vers l'extérieur du tube T1. La première surface externe SE1 de la seconde partie P2 de l'élément mâle EM s'étend de la première surface de butée SB1 jusqu'au niveau du filetage mâle FM. La seconde partie P2 comprend en outre une deuxième surface de butée SB2 prolongeant la première surface interne SI1 et prolongée par une (quatrième) surface interne SI4 au moins en partie cylindrique et destinée à être au contact du fluide (ou gaz) circulant dans le tube T1. Les première surface de butée axiale SB1, première surface interne SI1 et deuxième surface de butée SB2 définissent ce que l'homme de l'art appelle une "feuillure mâle".

Comme cela est illustré sur la figure 3, la première surface interne SI1 peut être désorientée (ou inclinée) d'un angle α3 choisi par rapport à la direction longitudinale A du tube T1, pour une raison qui sera évoquée plus loin. Elle forme ainsi initialement une surface conique. L'angle d'inclinaison est de préférence compris entre environ 0,1° et environ 15°, et plus préférentiellement égal à environ 2,5°. Par ailleurs, comme illustré, la première surface externe SE1 peut être légèrement bombée, et plus précisément torique de grand rayon, par exemple entre 20 mm et 100 mm, afin de faciliter son impression dans une gorge G1, comme on le verra plus loin.

Comme cela est illustré sur la figure 4, l'extrémité femelle EF d'un tube T2 comporte également deux parties P3 et P4. La première partie P3, placée la plus à l'extrémité du tube T2, est pourvue d'un filetage femelle interne FF, homologue du filetage mâle FM.

La seconde partie P4 prolonge la première partie P3 vers la partie centrale du tube T2. Elle comprend tout d'abord une seconde lèvre annulaire (ou doigt annulaire) L2 comprenant une troisième surface de butée SB3, une deuxième surface externe SE2, orientée vers l'extérieur du tube T2, prolongeant la troisième surface de butée SB3 dans une direction opposée à la première partie P3 et destinée à être placée en regard de la première surface interne SI1, et une deuxième surface interne SI2 au moins en partie cylindrique, orientée vers l'intérieur du tube T2 et prolongeant également la troisième surface de butée SB3 dans une direction opposée à la première partie P3.

Elle comprend en outre une quatrième surface de butée axiale SB4, initialement sensiblement plane et perpendiculaire à la direction longitudinale A du tube T2, et une troisième surface interne SI3 en partie cylindrique, orientée vers l'intérieur du tube T2 et prolongeant la quatrième surface de butée axiale SB4 en direction de la première partie P3. Une partie de la troisième surface interne SI3 définit conjointement avec les deuxième surface externe SE2 et quatrième surface de butée SB4 un logement (ou rainure) annulaire LO homologue de la première lèvre L1 de manière à la recevoir lors de la phase de vissage des tubes T1 et T2, sur laquelle on reviendra plus loin.

Le logement LO s'étend sur une longueur axiale choisie PR, égale à celle de la seconde lèvre L2, et suivant une profondeur radiale choisie H (perpendiculaire à la direction longitudinale A). Préférentiellement, le rapport PR/H est compris entre environ 1 et environ 3, et plus préférentiellement entre environ 1,2 et environ 1,6. Il est encore plus préférentiellement égal à environ 1,5. Par exemple, PR est égal à 4 mm et H est égal à 2,7 mm, ce qui fournit un rapport PR/H sensiblement égal à 1,5. Comme on le verra plus loin, ces deux dimensions PR et H sont choisies de manière à permettre une déformation choisie de la première lèvre L1 et de la zone à la racine de celle-ci.

Les troisième surface de butée SB3, deuxième surface externe SE2 et quatrième surface de butée axiale SB4 définissent ce que l'homme de l'art appelle une "feuillure femelle".

Une gorge annulaire G1 est par ailleurs définie dans une partie au moins de la troisième surface interne SI3. Elle comporte initialement, de préférence, une partie centrale PC sensiblement cylindrique et prolongée de part et d'autre par deux portions curvilignes PC1 et PC2. Ces portions curvilignes C1 et C2 présentent initialement, de préférence, des rayons de courbure sensiblement identiques, compris de préférence entre environ 2 mm et environ 20 mm. Mais, cette gorge G1 pourrait ne comporter que deux portions curvilignes.

Par exemple, la gorge G1 comprend une partie centrale PC qui s'étend sur une longueur axiale PR' égale à environ 2 mm, une profondeur radiale H' égale à environ 1 mm, et des portions curvilignes C1 et C2 qui présentent un rayon de courbure égal à environ 5 mm. La profondeur radiale H' de la gorge G1 est généralement limitée par l'épaisseur du tube T2, au niveau du plan de symétrie PSG de ladite gorge, laquelle ne doit pas être inférieure à une épaisseur minimale servant au calcul de la section critique du joint fileté. Plus précisément, la valeur maximale de la profondeur radiale H' est choisie de sorte que la section droite de matière en fond de gorge G1 soit supérieure au produit de la section du tube T1 ou T2 dans sa partie courante (ou de la plus faible de ces deux sections si elles sont différentes) par l'efficacité du joint en traction. Le rapport entre la section critique des éléments filetés et la section de tube (T1, T2) caractérise l'efficacité de la connexion (ou du joint), laquelle est avec la section du tube une donnée d'entrée de la conception d'une colonne tubulaire.

Dans cette configuration, le plan de symétrie PSG de la gorge G1 est placé à une distance axiale choisie D de la quatrième surface de butée axiale SB4 qui définit le fond du logement (ou rainure) LO. Par exemple, avec les valeurs précitées, la distance D est égale à environ 5,61 mm. Par ailleurs, après vissage, la partie centrale PC de la gorge G1 est sensiblement placée à l'aplomb de la surépaisseur SA1.

Comme on le verra plus loin, le rayon de courbure (notamment du côté du filetage), la profondeur radiale H', la longueur axiale PR et la profondeur radiale H sont choisis de manière à permettre la déformation choisie de la première lèvre L1 et de la zone de la seconde partie P2 à la racine de celle-ci.

La seconde partie P4 comprend également une autre (cinquième) surface interne SI5 cylindrique prolongeant la deuxième surface de butée SB2 dans la direction opposée à la première partie P3 (c'est-à-dire en direction de la partie centrale du tube T2) et destinée à être au contact du fluide (ou gaz) circulant dans le tube T2.

Selon l'invention, la quatrième surface interne SI4 comprend, au voisinage de la deuxième surface de butée SB2, une surépaisseur annulaire locale SA1 en direction de l'intérieur du tube T1.

Préférentiellement, comme illustré sur les figures 3 et 5 à 7, cette surépaisseur SA1 est sensiblement constante dans la zone d'extension de la partie centrale PC de la gorge G1, puis elle décroît. Cette décroissance est préférentiellement sensiblement continue en direction de la première partie P1. Elle peut par exemple se faire selon un angle α9 par rapport à la direction longitudinale A compris entre environ 5° et environ 30°, et plus préférentiellement entre environ 10° et environ 20°, et encore plus préférentiellement égal à environ 12°.

La surépaisseur maximale au niveau de la zone d'épaisseur constante définit un diamètre intérieur minimal de l'élément mâle EM. Ce diamètre intérieur doit être supérieur au diamètre d'un tampon (appelé "drift" par l'homme du métier). Le tampon (ou drift) est un outil qui est introduit à l'intérieur des tubes, avant de les descendre dans les puits, afm de s'assurer qu'ils disposent d'un diamètre libre intérieur minimal garantissant le passage d'outils dans la colonne sans risque d'accrochage. Lorsqu'elle demeure inférieure à la valeur mentionnée ci-avant, la valeur optimale de la surépaisseur est alors fixée par la quantité de matière nécessaire pour faire monter au maximum la première lèvre L1 dans le fond de la gorge G1 lors de l'expansion afin qu'elle se déforme conformément aux besoins. Par exemple cette surépaisseur est égale à environ 0,8 mm.

Cette surépaisseur SA 1 offre un surplus de matière qui permet, pendant la phase d'expansion diamétrale sur laquelle on reviendra plus loin, de combler l'espace vide de la gorge G1, et de déformer la première lèvre L1 et son voisinage afin de créer un épaulement ou talon annulaire EP qui permet non seulement d'immobiliser axialement le tube T1 par rapport au tube T2, mais également de créer une zone d'étanchéité par contact serrant de type "métal sur métal".

La constitution d'un joint tubulaire expansé selon l'invention s'effectue par la mise en oeuvre d'un procédé comportant les étapes suivantes.

Dans une première étape illustrée sur la figure 5, on visse l'extrémité, par exemple mâle EM, de l'un des tubes, par exemple T1, sur l'extrémité, par exemple femelle EF, de l'autre tube, par exemple T2, jusqu'à ce que la première surface de butée axiale SB 1 de la première lèvre L1 s'appuie sur la quatrième surface de butée axiale SB4 du logement (ou rainure) LO.

Afin de faciliter ce vissage, et comme illustré sur la figure 4, la deuxième surface externe SE2 de la seconde lèvre L2 peut présenter sur une courte distance une inclinaison d'un angle choisi α5 par rapport à la direction longitudinale A, au niveau de sa liaison avec la troisième surface de butée SB3. Elle forme ainsi initialement un chanfrein de surface conique. Préférentiellement, cette inclinaison est initialement comprise entre un angle d'environ +8° et un angle d'environ +12°. Plus préférentiellement encore, elle est égale à environ 10°. Une telle inclinaison permet de faciliter la pénétration de la première lèvre L1 dans le logement (ou rainure) LO, notamment dans le cas d'interférences accidentelles, ce qui permet de diminuer les éventuels risques de grippage ou d'endommagement de la première lèvre L1, et notamment de l'arête d'extrémité de sa première surface interne SI1. Une telle interférence peut en effet survenir entre les première surface interne SI1 et deuxième surface externe SE2 avant que la deuxième surface de butée SB2 ne s'appuie sur la troisième surface de butée SB3.

Puis, dans une deuxième étape on poursuit le vissage jusqu'à ce que la deuxième surface de butée SB2 s'appuie sur la troisième surface de butée SB3. La poursuite du vissage, après la mise en butée de la première surface de butée SB1 sur la quatrième surface de butée SB4, permet d'initier l'emmagasinement d'énergie potentielle élastique dans la première lèvre L1, en mettant celle-ci en compression axiale.

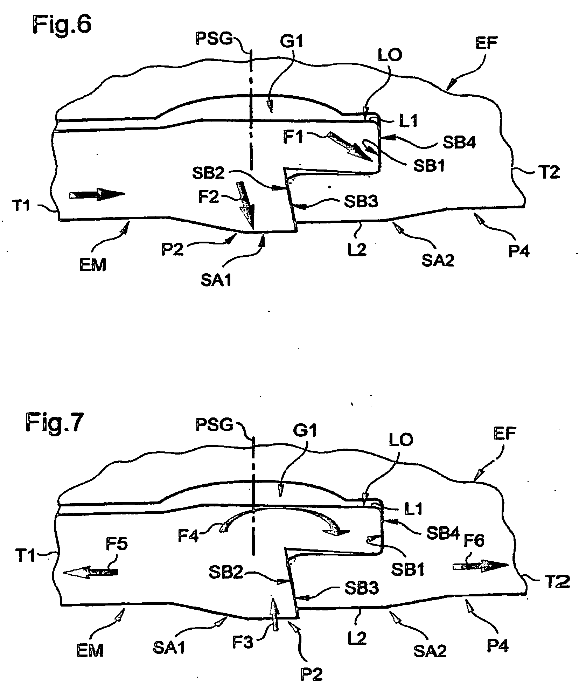

Dans une troisième étape illustrée sur la figure 6, on poursuit encore le vissage afin de pré-contraindre radialement la première lèvre L1 en direction de l'axe du joint. Cette précontrainte radiale peut être favorisée par des inclinaisons des deuxième surface de butée SB2 et troisième surface de butée SB3 d'angles choisis α4, par rapport à un plan perpendiculaire à la direction longitudinale A, sensiblement identiques.

Préférentiellement, comme illustré sur les figures 3 et 4, les deuxième SB2 et troisième SB3 surfaces de butée présentent initialement des surfaces coniques respectivement convexe et concave et des inclinaisons sensiblement égales. On entend ici par "inclinaisons sensiblement égales" des inclinaison égales entre elles, à environ ±5° près. Cette inclinaison commune est préférentiellement comprise entre un angle α4 d'environ +5° et un angle α4 d'environ +30°. Elle est plus préférentiellement encore égale à environ 10°. Cette inclinaison permet le serrage entre les première surface interne SI1 et deuxième surface externe SE2 avant la phase d'expansion. Ce serrage permet d'assurer l'étanchéité, notamment au gaz, avant la phase d'expansion.

On obtient ainsi, avant expansion, une excellente étanchéité aux gaz sous pression interne, y compris en présence de forces de traction ou de compression axiale, et une bonne étanchéité sous pression externe, y compris en présence de forces de compression axiale.

Les précontraintes induites sont matérialisées par les flèches F1 et F2 sur la figure 6.

Dans une quatrième étape, on introduit axialement dans l'un des tubes T1 et T2 un outil d'expansion diamétrale, comme par exemple un boulet à tête conique dont le diamètre maximal est supérieur au diamètre interne initial DI des tubes T1 et T2 (égal à 2 fois le rayon interne RI matérialisé sur la figure 1) et est sensiblement égal à leur diamètre interne final. Le choix de la direction d'introduction ne revêt pas une réelle importance. Par conséquent, le boulet peut être déplacé axialement d'une extrémité mâle EM vers une extrémité femelle EF, ou inversement.

Le déplacement du boulet s'effectue de manière connue de l'homme de l'art (voir notamment les documents US 6,604,763 et WO 03/071086), par exemple par traction à l'aide de tiges de forage ou bien en exerçant une pression hydraulique. Le boulet a par exemple une forme cylindro-conique avec une partie conique d' entrée chargée d'effectuer l'expansion et prolongée par une partie cylindrique médiane. Mais, sa forme peut être également sphérique ou biconique (partie conique d'entrée prolongée par une partie cylindrique, elle-même prolongée par une partie conique de sortie). Les rayons de raccordement de ces trois parties du boulet sont choisis en fonction des besoins.

D'autres outils d'expansion peuvent être utilisés à la place des boulets, comme par exemple un outil d'expansion rotatif à trois rouleaux réalisant une expansion mécanique. Ces outils d'expansion (y compris les boulets) et leurs modes d'utilisation sont notamment décrits dans les documents brevets WO 02/081863, US 6,457,532 et US 2002/0139540.

L'expansion diamétrale s'effectue dans le domaine des déformations plastiques. Les déformations plastiques générées augmentant la limite d'élasticité des éléments tubulaires, on doit par conséquent utiliser des métaux supportant de telles déformations. Par exemple, un tube présentant initialement une limite d'élasticité de 310 MPa (45 KSI) voit cette limite passer à 380 MPa (55 KSI) après expansion.

Lorsque le boulet parvient au niveau de la quatrième surface interne SI4 de la seconde partie P2 de l'extrémité mâle EM et de la cinquième surface interne SI5 de la seconde partie P4 de l'extrémité femelle EF, la matière expansée contraint la première lèvre L1 à se déformer dans la gorge G1. Les déformations subies par le joint pendant l'expansion sont matérialisées par les flèches F3 à F6 sur la figure 7.

Plus précisément, du fait des différentes contraintes qu'elle subit, et notamment du fait de sa surépaisseur SA1, la première lèvre L1 est contrainte de se courber (flèche F4) et de prendre au moins en partie la forme de la gorge G1. La surépaisseur SA1 offre un surplus de matière qui permet de combler l'espace vide de la gorge G1, et par conséquent permet à la première lèvre L1 et à la zone située juste avant celle-ci de prendre la conformation d'une partie au moins de ladite gorge G1, et donc de présenter sensiblement la déformation recherchée.

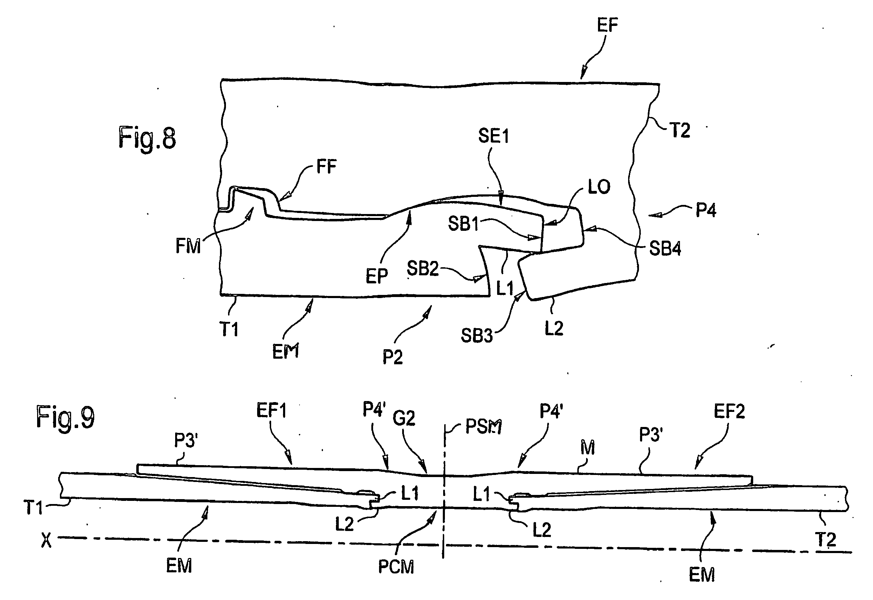

Comme illustré sur la figure 8 et comme évoqué précédemment, la déformation génère un épaulement ou talon annulaire EP, au niveau de la première surface externe SE1 de l'extrémité mâle EM, avant la première lèvre L1, qui permet de créer une zone d'étanchéité par contacts serrants de la manière indiquée ci-dessous.

L'expansion effectuée par le boulet se traduit, du fait du diamètre de l'élément femelle EF plus grand que celui de l'élément mâle EM, par un taux d'expansion de l'élément mâle EM plus grand que celui de l'élément femelle EF.

Il s'en suit, du fait de la conservation de la matière, une contraction de l'élément mâle EM plus importante que celle de l'élément femelle EF, ce qui se traduit par un déplacement relatif axial de ces deux éléments dans le sens d'un dégagement matérialisé par les flèches F5 et F6 de la figure 7. Ce déplacement vient serrer fortement l'un contre l'autre les épaulements inclinés EP, créant l'étanchéité visée. On peut noter que la pression de contact ou serrage est encore renforcée lorsque le joint est soumis à des efforts de traction axiale.

En raison du désengagement axial lors de l'expansion, les longueurs axiales des première L1 et seconde L2 lèvres doivent être choisies de façon précise. En effet, si la première lèvre L1 est trop courte, elle risque de sortir de son logement LO et donc de plonger vers l'axe du joint, supprimant ainsi l'étanchéité après expansion. Si la seconde lèvre L2 est trop longue, le logement LO est difficile à usiner.

La courbure de la première lèvre L1 lors de l'expansion, favorisée par la forme de la gorge G1 et la surépaisseur SA1, se traduit par un second contact serrant entre la partie interne de l'extrémité de la première lèvre L1 et la deuxième surface externe SE2.

La première lèvre L1 est alors arcboutée et coincée entre l'épaulement constitué dans la paroi de la gorge G1 et la deuxième surface externe SE2. Un tel double contact permet d'assurer une excellente étanchéité, stable pour les différents modes de chargement possibles, comprenant tant la pression intérieure qu'extérieure combinée ou non à des efforts de traction ou de compression axiale.

Afin de favoriser encore plus la courbure de la première lèvre L1 et de renforcer encore le contact entre l'épaulement ou talon EP et la gorge G1, on peut prévoir, comme illustré sur les figures 3 et 5 à 7, un décrochement DC1 vers l'intérieur du tube T1, au niveau de la première surface externe SE1 et avant la première partie P1. Ce décrochement DC1 est préférentiellement sensiblement continu. Il constitue ainsi initialement un chanfrein conique. Il peut par exemple se faire selon un angle α6 par rapport à la direction longitudinale A, compris entre environ 8° et environ 12°, et plus préférentiellement égal à environ 10°. Par exemple, ce décrochement DC 1 débute à une distance de la première surface de butée axiale SB1 (suivant la direction longitudinale A) égale à environ 7,8 mm.

Par ailleurs, afin de disposer de matière là où elle est nécessaire, le tube T1 peut subir au niveau de ses première P1 et seconde P2 parties, et avant usinage de l'élément mâle EM, un rétreint conique de demi-angle au sommet α7, le diamètre du cône allant en diminuant lorsque l'on se dirige vers l'extrémité libre de l'élément mâle EM.

Ce rétreint permet d'augmenter l'épaisseur de matière au niveau de la seconde partie P2 et de loger la surépaisseur SA1. Après usinage de l'élément mâle EM et notamment de la surépaisseur SA1, la trace du rétreint se traduit par un décrochement annulaire local DC2 vers l'intérieur du tube lorsque l'on se dirige vers l'extrémité libre de l'élémént mâle EM.

Pour ne pas gêner la progression du boulet dans le tube T1, le rétreint est préférentiellement sensiblement continu et l'angle α7 compris entre environ 2° et environ 20°, et plus préférentiellement égal à environ 5°.

Lorsque la première surface interne SI1 de la première lèvre L1 présente une inclinaison (par exemple d'environ 2,5°), cela permet à la seconde lèvre L2 d'être placée plus près de l'extérieur du tube T2. Par conséquent, lorsque le boulet parvient au niveau de la seconde lèvre L2, celle-ci peut se rapprocher de l'extérieur du tube T2. En outre, cela permet de limiter l'effet "banane" qui tend à faire tomber la seconde lèvre L2 vers l'intérieur de la cavité du tube T2.

Ce rapprochement peut être accentué par la présence d'une surépaisseur annulaire locale SA2 en direction de l'intérieur du tube T2, au niveau de la deuxième surface interne SI2 de la seconde lèvre L2 et au voisinage de la troisième surface de butée SB3. Préférentiellement, comme illustré sur les figures 4 à 7, cette surépaisseur SA2 est sensiblement constante dans la zone d'extension de la seconde lèvre L2, puis elle décroît. Cette décroissance est préférentiellement sensiblement continue. Elle constitue ainsi initialement un chanfrein conique. Elle peut par exemple se faire selon un angle α8 par rapport à la direction longitudinale A, compris entre environ 8° et environ 12°, et plus préférentiellement égal à environ 10°.

Cette surépaisseur SA2 dépend préférentiellement de la surépaisseur SA1 et est plus préférentiellement encore inférieure à celle-ci. Elle est de toute façon inférieure à une valeur maximale définie par le diamètre du tampon (ou "drift"). Par exemple, cette surépaisseur SA2 est comprise entre environ 0,2 mm et 1 mm, et de préférence égale à environ 0,5 mm. Le décalage initial offert par des surépaisseurs SA1 et SA2 différentes permet de favoriser la déformation finale, notamment de la première lèvre L1. Ce décalage ne doit cependant pas être trop important car il pourrait annuler l'effet précité offert par l'inclinaison de la première surface interne SI1 de la première lèvre L1 (lorsqu'elle existe).

Comme mentionné précédemment, le résultat de l'expansion induite par le passage du boulet est illustré sur la figure 8. Il est important de noter que dans les joints manchonnés (et non pas dans les joints intégraux), du fait que l'expansion provoque un désengagement axial, les déformations des première L 1 et seconde L2 lèvres peuvent ne pas être totalement identiques aux deux extrémités opposées du manchon. Cette différence (ou dissymétrie) est cependant moindre que celle survenant dans les joints manchonnés décrits dans le document FR 2 844 331.

Il est également important de noter que le retour élastique des éléments du joint fileté après le passage du boulet est négligeable devant les déformations plastiques mises en jeu.

On se réfère maintenant à la figure 9 pour décrire un exemple de réalisation d'un assemblage de deux joints selon l'invention, disposés symétriquement. Dans cet exemple, les deux joints permettent de connecter deux tubes T1 et T2 de grandes longueurs par l'intermédiaire d'un élément tubulaire de type manchon de raccordement M. Ce manchon M est ici de forme symétrique par rapport à un plan de symétrie PSM perpendiculaire à la direction longitudinale A des tubes T1 et T2. Il est par ailleurs de type femelle/femelle.

Un tel manchon M comprend une partie centrale PCM prolongée de part et d'autre par deux premières parties P3' et deux secondes parties P4', du même type que les première (P3) et seconde (P4) parties de l'extrémité femelle EF du tube T2 présenté ci-avant. Par conséquent, tout ce qui a été dit à propos des première (P3) et seconde (P4) parties de l'extrémité femelle du tube T2 s'applique également aux premières parties P3' et secondes parties P4' du manchon M.

Comme cela est illustré, la partie centrale PCM du manchon M comporte préférentiellement une gorge annulaire G2 (également appelée "lunule") définissant localement une sous-épaisseur centrée sur le plan de symétrie PSM.

Cette lunule G2 permet de réduire l'épaisseur du manchon M dans sa partie la plus épaisse et donc de diminuer les pressions et les forces d'expansion. En outre, elle permet de mieux contrôler les déformations au niveau des différentes surfaces de butée (SB 1 à SB4) et portées tout en offrant au joint un aspect sensiblement rectiligne (en surface de révolution extérieure) après expansion. La section du manchon M au niveau de son plan de symétrie PSM doit donc être choisie supérieure ou égale au produit de la section d'une partie courante des tubes T1 et T2, aux extrémités desquels sont formés les premiers éléments tubulaires, par l'efficacité du joint.

Préférentiellement, la lunule s'étend sensiblement entre les deux troisièmes surfaces de butée axiale SB3 des deux secondes lèvres L2 opposées. Mais, elle peut s'étendre sur une distance plus importante, notamment entre les derniers filets des deux filetages femelle FF. Les derniers filets sont ici ceux qui sont du côté des troisièmes surfaces de butée SB3.

Par ailleurs, cette lunule G2 peut être en forme de cuvette munie d'une partie centrale présentant la sous-épaisseur maximale (au niveau du plan de symétrie PSM) et de parois latérales inclinées selon un angle de préférence inférieur à environ 30°, et plus préférentiellement égal à environ 15°.

Il est important de noter que la lunule (et donc la gorge G2) n'est pas forcément symétrique par rapport au plan PSG. Elle peut en effet présenter deux parties dissymétriques de part et d'autre du plan PSG.

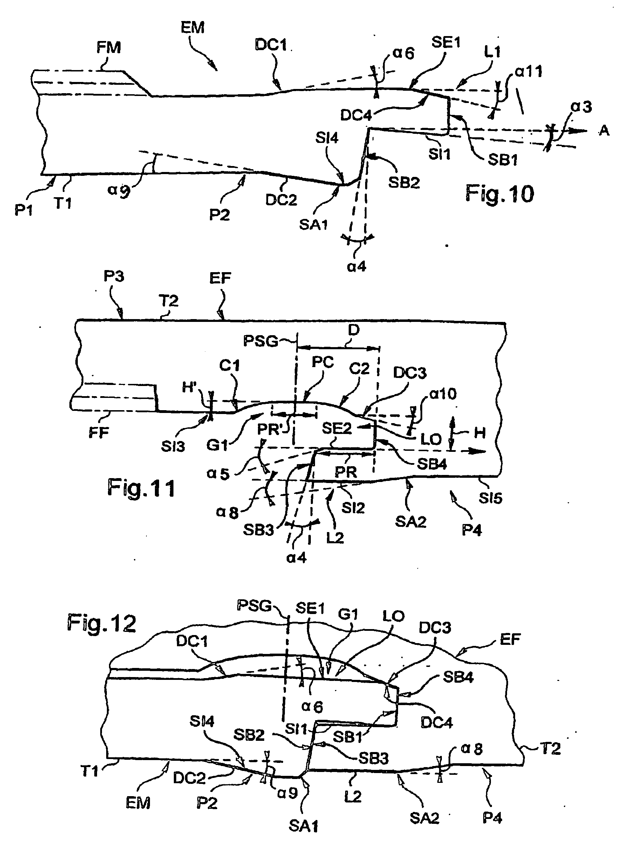

On se réfère maintenant aux figures 10 à 12 pour décrire un autre exemple de réalisation d'un joint tubulaire expansible selon l'invention.

Cet exemple de réalisation comporte de nombreuses similitudes avec celui précédemment décrit en référence aux figures 1 à 8. Par conséquent, leurs éléments communs portent des références identiques. En outre, les éléments de formes sensiblement identiques et assurant des fonctions sensiblement identiques ne seront pas de nouveau décrits.

Par ailleurs, cet exemple de réalisation, tout comme le précédent, concerne non seulement les joints permettant de connecter l'extrémité de type mâle EM (ou élément tubulaire mâle) d'un premier tube T1, de grande longueur et d'axe de révolution XX, et l'extrémité de type femelle EF (ou élément tubulaire femelle) d'un second tube T2, également de grande longueur et d'axe de révolution XX, mais également les assemblages de deux joints disposés symétriquement, décrits ci-avant en référence à la figure 9 et permettant de connecter deux tubes T1 et T2 de grandes longueurs par l'intermédiaire d'un élément tubulaire de type manchon de raccordement M.

Ce qui différencie cet exemple de réalisation du précédent, c'est principalement le détail de réalisation des deuxième SB2 et troisième SB3 surfaces de butée, ainsi qu'éventuellement le détail de réalisation des première surface externe SE 1 et troisième surface interne SI3, des premier EM et second EF éléments tubulaires, qui permettent de réaliser les premières et troisièmes étanchéités (ou contacts serrant), avant expansion.

La deuxième surface de butée SB2 et la troisième surface de butée SB3 possèdent toujours initialement des surfaces coniques présentant des inclinaisons d'angles α4 choisis par rapport à un plan perpendiculaire à la direction longitudinale A, sensiblement identiques. Mais, dans ce second exemple de réalisation, les surfaces coniques des deuxième surface de butée SB2 et troisième surface de butée SB3 sont respectivement concave et convexe.

Les inclinaisons des angles α4 sont choisies de sorte que la deuxième surface de butée SB2 s'appuie contre la troisième surface de butée SB3 en induisant le premier contact serrant radial et étanche de la première surface externe SE1 (de la première lèvre L1) contre la troisième surface interne SI3.

Préférentiellement, comme illustré sur les figures 10 à 12, les deuxième SB2 et troisième SB3 surfaces de butée présentent sensiblement une même inclinaison initiale. Cette inclinaison commune est préférentiellement comprise entre un angle α4 d'environ +5° et un angle α4 d'environ +30°. Elle est plus préférentiellement encore égale à environ 10°.

Lorsque la deuxième surface de butée SB2 s'appuie contre la troisième surface de butée SB3 pendant la phase de vissage, la première lèvre L1est contrainte à se diriger vers l'extérieur de la connexion. Cela permet de pré-contraindre radialement la première lèvre L1 et donc de renforcer son contact avec le second élément tubulaire EF au niveau du logement LO.

Par ailleurs, il est avantageux que la troisième surface interne SI3 du second élément tubulaire EF comprenne une portion DC3, placée entre sa liaison avec la quatrième surface de butée SB4 et la seconde portion curviligne C2 de la gorge G1, et dans laquelle est défini initialement une première surface d'étanchéité présentant globalement une inclinaison d'un angle α10 choisi par rapport à la direction longitudinale A.

Cette première surface d'étanchéité DC3 peut être éventuellement définie par un troisième décrochement annulaire local vers l'intérieur de la troisième surface interne SI3. Elle peut se présenter sous la forme d'une surface conique ou d'une surface bombée, présentant éventuellement une portion de type torique.

L'angle d'inclinaison α10 de la première surface d' étanchéité (éventuellement du troisième décrochement annulaire local) DC3 est initialement compris, de préférence, entre environ +1° et environ +30°, et plus préférentiellement égal à environ 10°.

Par ailleurs, la première surface externe SE1 du premier élément tubulaire EM comprend une zone terminale, située au niveau de sa liaison avec la première surface de butée SB 1 (et donc au niveau de la première lèvre L1), et dans laquelle est initialement définie une seconde surface d'étanchéité présentant globalement une inclinaison d'un angle α11 choisi par rapport à la direction longitudinale A.

Cette seconde surface d'étanchéité peut être éventuellement définie par un quatrième décrochement annulaire local vers l'intérieur de la première surface externe SE1. Elle peut se présenter sous la forme d'une surface conique ou d'une surface bombée, présentant éventuellement une portion de type torique.

Cette seconde surface d'étanchéité DC4 est destinée à être serrée radialement pendant la phase de vissage, contre la première surface d'étanchéité DC3 du second élément tubulaire EF.

L'angle d'inclinaison α11 de la seconde surface d'étanchéité (éventuellement du quatrième décrochement annulaire local) DC4 est initialement compris, de préférence, entre environ +1° et environ +30°, et plus préférentiellement égal à environ 10°.

Les angles d'inclinaison α10 et α11 sont préférentiellement identiques. Mais, cela n'est pas obligatoire. On peut en effet envisager, par exemple, que l'une des première DC3 et seconde DC4 surfaces d'étanchéité soit conique ou bombée et présente une inclinaison non nulle, tandis que l'autre surface d'étanchéité est par exemple cylindrique et présente une inclinaison nulle.

Les première DC3 et seconde DC4 surfaces d'étanchéité, éventuellement définies par les troisième et quatrième décrochements annulaires locaux, sont respectivement agencées de manière à pouvoir être serrées radialement l'une contre l'autre, pendant la phase de vissage, en induisant un troisième contact serrant étanche.

Par ailleurs, les première DC3 et seconde DC4 surfaces d'étanchéité peuvent être agencées de manière à ce que le premier contact serrant étanche soit induit après le troisième contact serrant étanche. Cela permet en effet de renforcer le premier contact serrant étanche.

En d'autres termes, pendant la phase de vissage il est préférable que la première lèvre L1 entre tout d'abord en contact par la première surface d'étanchéité DC3 avec la seconde surface d'étanchéité DC4, puis que la deuxième surface de butée SB2 s'appuie sur la troisième surface de butée SB3.

Dans cet exemple de réalisation, la partie centrale PC de la gorge annulaire G1 s'étend par exemple sur une longueur axiale PR' égale à environ 2,2 mm, une profondeur radiale H' égale à environ 1 mm, et les portions curvilignes C1 et C2 présentent par exemple un rayon de courbure égal à environ 5,3 mm. Par ailleurs, la distance axiale D qui sépare le plan de symétrie PSG, de la gorge G1, de la quatrième surface de butée axiale SB4, qui définit le fond du logement (ou rainure) LO, est par exemple égale à environ 5,7 mm.

Le logement LO s'étend toujours sur une longueur axiale choisie PR, égale à celle de la seconde lèvre L2, et suivant une profondeur radiale choisie H (perpendiculaire à la direction longitudinale A). Le rapport PR/H est toujours préférentiellement compris entre environ 1 et environ 3, mais il est désormais plus préférentiellement compris entre environ 1,4 et environ 1,9, et encore plus préférentiellement égal à environ 1,7. Par exemple, PR est égal à 4,2 mm et H est égal à 2,4 mm, ce qui fournit un rapport PR/H égal à environ 1,7.

Par ailleurs, comme dans l'exemple de réalisation précédent, la deuxième surface externe SE2 de la seconde lèvre L2 peut présenter sur une courte distance une inclinaison d'un angle choisi α5 par rapport à la direction longitudinale A, au niveau de sa liaison avec la troisième surface de butée SB3. Elle forme ainsi initialement un chanfrein de surface conique dont l'inclinaison est initialement comprise entre un angle d'environ +8° et un angle d'environ +12°, et plus préférentiellement égale à environ 10°. Comme indiqué précédemment, cela permet de faciliter la pénétration de la première lèvre L1 dans le logement (ou rainure) LO, notamment dans le cas d'interférences accidentelles.

En outre, comme dans l'exemple de réalisation précédent, la première surface interne SI1 de la première lèvre L1 est de préférence inclinée d'un angle α3 choisi par rapport à la direction longitudinale A du tube T1. Elle forme ainsi initialement une surface conique. L'angle d'inclinaison est toujours, de préférence, compris entre environ 0,1° et environ 15°, et plus préférentiellement égal à environ 2,5°. Comme indiqué précédemment, cette inclinaison permet à la seconde lèvre L2 de se rapprocher de l'extérieur du tube T2 lors du passage du boulet, limitant ainsi l'effet banane.
De plus, comme dans l'exemple de réalisation précédent, afin de favoriser la courbure de la première lèvre L1 et de renforcer le contact entre l'épaulement ou talon EP et la gorge G1, la première surface externe SE1 peut comprendre juste avant la première partie P1 un premier décrochement DC1 vers l'intérieur du tube T1, préférentiellement sensiblement continu. Ce premier décrochement DC 1 constitue initialement un chanfrein conique d'angle α6, par rapport à la direction longitudinale A, compris entre environ 8° et environ 12°, et plus préférentiellement égal à environ 10°. Par exemple, ce décrochement DC 1 débute à une distance de la première surface de butée axiale SB 1 (suivant la direction longitudinale A) égale à environ 8,1 mm.

Toujours comme dans l'exemple de réalisation précédent, la quatrième surface interne SI4 peut comprendre une surépaisseur annulaire locale SA1 en direction de l'intérieur du tube T1, au voisinage de la deuxième surface de butée SB2. Préférentiellement, comme illustré sur les figures 10 et 12, cette surépaisseur SA1 est sensiblement constante dans la zone d'extension de la partie centrale PC de la gorge G1, puis elle décroît, préférentiellement de façon sensiblement continue en direction de la première partie P1. Elle peut par exemple se faire selon un angle α9 par rapport à la direction longitudinale A compris entre environ 5° et environ 30°, et plus préférentiellement entre environ 10° et environ 20°, et encore plus préférentiellement égal à environ 12°.

De même, la cinquième surface interne SI5 de la seconde lèvre L2 peut comprendre, comme dans l'exemple de réalisation précédent, une surépaisseur annulaire locale SA2 en direction de l'intérieur du tube T2, au voisinage de la troisième surface de butée SB3. Préférentiellement, comme illustré sur les figures 11 et 12, cette surépaisseur SA2 est sensiblement constante dans la zone d'extension de la seconde lèvre L2, puis elle décroît préférentiellement de façon sensiblement continue. Elle constitue ainsi initialement un chanfrein conique. Elle peut par exemple se faire selon un angle α8 par rapport à la direction longitudinale A, compris entre environ 8° et environ 12°, et plus préférentiellement égal à environ 10°. Cette surépaisseur SA2 dépend préférentiellement de la surépaisseur SA1 et est préférentiellement inférieure à celle-ci. Par exemple, cette surépaisseur SA2 est comprise entre environ 0,3 mm et 0,8 mm, et de préférence égale à environ 0,5 mm.

La constitution d'un joint expansé à partir d'un joint expansible du type de celui décrit ci-avant en référence aux figures 10 à 12 est sensiblement identique à celle décrite en référence aux figures 5 à 8.

Dans une première étape, on visse l'extrémité, par exemple mâle EM, de l'un des tubes, par exemple T1, sur l'extrémité, par exemple femelle EF, de l'autre tube, par exemple T2, jusqu'à ce que la seconde surface d'étanchéité DC4 entre en contact avec la première surface d'étanchéité DC3 en induisant le troisième contact serrant étanche.

Dans une deuxième étape, on poursuit le vissage jusqu'à ce que la deuxième surface de butée SB2 de la première lèvre L1 s'appuie sur la troisième surface de butée SB3 de la seconde lèvre L2 en induisant le premier contact serrant radial et étanche de la première surface externe SE1 contre la troisième surface interne SI3.

Dans une troisième étape, on poursuit encore le vissage afin de pré-contraindre radialement la première lèvre L1 grâce à l'inclinaison (ou pente) des deuxième SB2 et troisième SB3 surfaces de butée et grâce à l'inclinaison (ou pente) des première DC3 et seconde DC4 surfaces d'étanchéité du logement LO et de la première lèvre L1, jusqu'à un niveau de couple spécifié.

Le contact entre les surfaces internes et externes de la lèvre L1 et du logement LO est ainsi encore plus renforcé que dans l'exemple précédent, ce qui permet d'assurer une étanchéité du joint encore plus importante avant l'étape d'expansion diamétrale.

On obtient ainsi, avant expansion, une excellente étanchéité aux fluides sous pression interne, y compris en présence de forces de traction ou de compression axiale.

La quatrième étape, qui consiste à expanser diamétralement le joint dans le domaine des déformations plastiques par introduction axiale dans l'un des tubes T1 et T2 d'un outil d'expansion diamétrale, comme par exemple un boulet à tête conique, est identique à celle décrite précédemment.

En fin d'expansion, un quatrième contact serrant étanche est défini entre une extrémité libre de la première lèvre L 1 (au niveau de sa première surface interne SI1) et la deuxième surface externe SE2 de la seconde lèvre L2. Ainsi, la première lèvre L 1 est coincée par son extrémité libre, du fait du quatrième contact serrant, et par le "talon" qui la prolonge au niveau de la première surface externe SE1, du fait du second contact serrant.

Lorsque le premier élément tubulaire EM comprend une première surface d'étanchéité DC3, et éventuellement lorsque le second élément tubulaire EF comprend une seconde surface d'étanchéité DC4, l'écart des performances d'étanchéité entre les côtés amont et aval d'un assemblage de joints est sensiblement réduit une fois la quatrième étape terminée. Cela résulte d'une augmentation des pressions de contact du côté amont sans détérioration des pressions de contact du côté aval.

Grâce à l'invention, on peut obtenir des joints tubulaires expansibles qui supportent des taux d'expansion élevés, voire très élevés, typiquement compris entre 10% et 35%, tout en assurant une étanchéité de qualité avant comme après expansion. Bien entendu, l'invention s'applique également aux taux d'expansion inférieurs à 10%.

En outre, l'invention permet de ne pas trop "dissymétriser" les déformations lors de l'expansion dans le cas d'un assemblage manchonné, et donc de procurer une bonne étanchéité des joints filetés expansés formés de chaque côté de la partie centrale du manchon.

Par ailleurs, l'invention peut être mise en oeuvre dans une gamme importante d'aciers et d'alliages, du moment que le matériau présente une ductilité suffisante pour subir l'expansion. Dans le cas des aciers le matériau peut être un acier non allié, ou un acier au Mn, ou un acier au Cr-Mo, ou un acier micro-allié, ou un acier au Bore, ou une combinaison des compositions précitées ( acier au Cr-Mo-Nb-B), ou un acier à 13% de Cr martensique, ou un acier duplex austéno-ferritique à 22 ou 25% de Chrome, ou encore un acier inoxydable austénitique. Par exemple, on peut utiliser un acier au C-Mn pour des puits non corrosifs, ou bien un acier à 0,2% de C et 13% de Cr (X2OCr13 selon la dénomination Euronorm et AISI 420 selon la dénomination américaine) pour des puits corrosifs contenant du CO₂.

En outre, le matériau peut être éventuellement traité thermiquement de manière à présenter une limite d'élasticité supérieure à une valeur choisie ou comprise dans un intervalle de valeurs choisies. La limite d'élasticité minimale peut par exemple être choisie dans un intervalle allant de 300 MPa à 1000 MPa, voire plus.

L'invention ne se limite pas aux procédés et aux modes de réalisation de joints tubulaires filetés étanches décrits ci-avant, seulement à titre d'exemple, mais elle englobe toutes les variantes que pourra envisager l'homme de l'art dans le cadre des revendications ci-après.

Ainsi, on a décrit des filetages mâle et femelle réalisés chacun en une seule partie, mais, ils pourraient être réalisés en plusieurs parties. Par ailleurs, on peut envisager d'utiliser des surfaces d'étanchéité séparées spécifiquement de manière à résister à la pression extérieure. Dans ce cas, elles peuvent être disposées soit vers l'extrémité femelle, soit au milieu des filetages.

## Revendications

1. Joint tubulaire expansible comprenant, d'une part, un premier élément tubulaire (EM) comportant une première partie (P1), munie d'un filetage mâle (FM), et une seconde partie (P2) prolongeant ladite première partie et comprenant i) une première surface externe (SE1), ii) une première lèvre annulaire (L1) ayant une première surface de butée axiale (SB1) et une première surface interne (SI1) et délimitée par ladite première surface externe (SE1) sur une partie de la longueur axiale de celle-ci, et iii) une deuxième surface de butée (SB2), et d'autre part, un second élément tubulaire (EF) comportant i) un filetage femelle (FF), homologue du filetage mâle (FM) et vissé sur celui-ci, ii) une seconde lèvre annulaire (L2), ayant une troisième surface de butée (SB3), une deuxième surface externe (SE2), placée en regard de ladite première surface interne (SI1), et une deuxième surface interne (SI2), iii) une quatrième surface de butée axiale (SB4), et iv) une troisième surface interne (SI3) s'étendant entre ladite quatrième surface de butée axiale (SB4) et ledit filetage femelle (FF) et définissant avec lesdites deuxième surface externe (SE2) et quatrième surface de butée (SB4) un logement annulaire (LO) homologue de ladite première lèvre (L1), tel que ledit premier élément tubulaire (EM) comprend une surépaisseur annulaire locale choisie (SA1) au niveau d'une quatrième surface interne (SI4) prolongeant la deuxième surface de butée (SB2), ladite surépaisseur annulaire (SA1) étant dirigée vers l'intérieur du joint, ledit second élément tubulaire (EF) comprend en un endroit choisi de sa troisième surface interne (SI3) une gorge annulaire interne (G1) placée sensiblement au niveau de ladite première surface externe (SE1) et de ladite surépaisseur annulaire (SA1), et lesdits premier (EM) et second (EF) éléments tubulaires sont conformés de sorte que ladite première lèvre (L1) est logée dans ledit logement annulaire (LO), et ladite deuxième surface de butée (SB2) s'appuie contre ladite troisième surface de butée (SB3) et/ou ladite première surface de butée (SB1) s'appuie contre ladite quatrième surface de butée (SB4), de manière à permettre, lors d'une expansion diamétrale dans le domaine de la déformation plastique effectuée ultérieurement sur le joint tubulaire expansible, la formation au niveau de ladite première surface externe (SE1) d'un épaulement annulaire (EP) présentant une partie au moins de la conformation de la gorge (G1) et en contact serrant et étanche avec celle-ci.

2. Joint selon la revendication 1, **caractérisé en ce que** lesdits premier (EM) et second (EF) éléments tubulaires sont conformés de sorte qu'après ladite expansion un autre contact serrant et étanche soit défini entre une partie d'extrémité interne de ladite première lèvre (L1) et ladite deuxième surface externe (SE2).

3. Joint selon l'une des revendications 1 et 2, **caractérisé en ce que** ledit premier élément tubulaire (EM) présente initialement une surépaisseur annulaire locale (SA1) croissante en direction de ladite deuxième surface de butée (SB2).

4. Joint selon la revendication 3, **caractérisé en ce que** ladite surépaisseur annulaire locale (SA1) croît sensiblement continûment selon une pente comprise entre environ 5° et environ 30°, et préférentiellement entre environ 10° et environ 20°.

5. Joint selon l'une des revendications 1 à 4, **caractérisé en ce que** ledit premier élément tubulaire (EM) présente initialement au niveau de sa première partie (P1), sur sa surface interne opposée audit filetage mâle (FM), un rétreint conique dans lequel est défini un décrochement annulaire local (DC2).

6. Joint selon la revendication 5, **caractérisé en ce que** ledit rétreint croît sensiblement continûment selon une pente par rapport à la direction longitudinale (A), comprise entre environ 2° et environ 20°.

7. Joint selon l'une des revendications 1 à 6, **caractérisé en ce que** ladite surépaisseur maximale (SA1) de la seconde partie (P2) est initialement inférieure à une valeur choisie en fonction d'un diamètre d'un tampon.

8. Joint selon l'une des revendications 1 à 7, **caractérisé en ce que** ladite deuxième surface interne (SI2) de la seconde lèvre (L2) présente initialement une surépaisseur annulaire locale choisie (SA2) dans une zone adjacente à ladite troisième surface de butée (SB3), de manière à augmenter la déformation de ladite première lèvre (L1) en direction de ladite gorge (G1) lors de l'expansion.

9. Joint selon la revendication 8, **caractérisé en ce que** ladite surépaisseur (SA2) de la seconde lèvre (L2) est inférieure à la surépaisseur (SA1) du premier élément tubulaire.

10. Joint selon l'une des revendications 8 et 9, **caractérisé en ce que** ladite surépaisseur (SA2) de la seconde lèvre (L2) est initialement inférieure à une valeur choisie en fonction d'un diamètre d'un tampon.

11. Joint selon l'une des revendications 1 à 10, **caractérisé en ce que** ledit second élément tubulaire (EF) présente initialement un rapport entre l'extension (PR) de sa seconde lèvre (L2) dans la direction longitudinale et l'extension (H) de son logement (LO) dans un plan transverse compris entre environ 1 et environ 3, et préférentiellement entre environ 1,2 et environ 1,6.

12. Joint selon l'une des revendications 1 à 11, **caractérisé en ce que** ladite gorge (G1) comporte initialement au moins deux portions curvilignes (C1, C2).

13. Joint selon la revendication 12, **caractérisé en ce que** lesdites portions curvilignes (C1, C2) présentent initialement des rayons de courbure sensiblement identiques.

14. Joint selon la revendication 13, **caractérisé en ce que** ledit rayon de courbure est initialement compris entre environ 2 mm et environ 20 mm.

15. Joint selon l'une des revendications 12 à 14, **caractérisé en ce que** les deux portions curvilignes (C1, C2) sont séparées par une partie centrale (PC) sensiblement cylindrique.

16. Joint selon l'une des revendications 12 à 15, **caractérisé en ce que** l'un au moins des éléments tubulaires (EM, EF) appartient à un tube de grande longueur (T1, T2) et que ladite gorge (G1) présente initialement une profondeur radiale (H') dont la valeur maximale est choisie de sorte que la section de matière en fond de gorge (G1) soit supérieure au produit de la plus faible section d'une partie courante dudit ou desdits tubes (T1, T2) par l'efficacité du joint en traction, c'est-à-dire par le rapport entre la section critique des éléments filetés et la section de tube (T1, T2).

17. Joint selon l'une des revendications 1 à 16, **caractérisé en ce que** lesdits filetages mâle (FM) et femelle (FF) sont choisis dans un groupe comprenant les filetages de type conique et de type cylindrique et sont chacun formés sur au moins une portion d'élément tubulaire (EM, EF).

18. Joint selon l'une des revendications 1 à 17, **caractérisé en ce que** lesdits premier (EM) et second (EF) éléments tubulaires sont conformés de sorte qu'après vissage ladite première lèvre (L1) soit comprimée axialement dans le domaine des déformations élastiques.

19. Joint selon l'une des revendications 1 à 18, **caractérisé en ce que** lesdits premier (EM) et second (EF) éléments tubulaires sont conformés de sorte que pendant ledit vissage ladite première surface de butée (SB1) s'appuie contre ladite quatrième surface de butée (SB4), puis ladite deuxième surface de butée (SB2) s'appuie contre ladite troisième surface de butée (SB3).

20. Joint selon la revendication 19, **caractérisé en ce que** lesdites deuxième (SB2) et troisième (SB3) surfaces de butée présentent initialement des surfaces coniques respectivement convexe et concave, d'inclinaisons sensiblement identiques par rapport à un plan transverse à la direction longitudinale (A), de manière à permettre un contact serrant et étanche entre ladite première surface interne (SI1) et ladite deuxième surface externe (SE2) après ledit vissage et avant ladite expansion.

21. Joint selon la revendication 20, **caractérisé en ce que** lesdites inclinaisons sont initialement comprises entre environ +5° et environ +30°.

22. Joint selon l'une des revendications 1 à 21, **caractérisé en ce que** ladite première surface interne (SI1) de la première lèvre (L1) est initialement inclinée par rapport à ladite direction longitudinale (A) d'un angle compris entre environ 0,1° et environ 15°.

23. Joint selon l'une des revendications 1 à 22, **caractérisé en ce que** lesdits filetages mâle (FM) et femelle (FF) comportent initialement des filets munis d'un flanc porteur présentant un angle négatif compris entre environ - 3° et environ - 15°.

24. Joint selon l'une des revendications 1 à 23, **caractérisé en ce que** lesdits filetages mâle (FM) et femelle (FF) comportent initialement des filets munis d'un flanc d'engagement présentant un angle positif compris entre environ + 10° et environ + 30°.

25. Joint selon la revendication 24, **caractérisé en ce que** lesdits filetages mâle (FM) et femelle (FF) présentent après vissage et avant expansion un jeu axial entre leurs flancs d'engagement compris entre environ 0,05 mm et environ 0,3 mm.

26. Joint selon l'une des revendications 1 à 25, **caractérisé en ce que** ledit premier élément tubulaire (EM) présente initialement au niveau de sa première surface externe (SE1) et avant sa première partie (P1), un chanfrein conique définissant un décrochement annulaire local (DC1) vers l'intérieur.

27. Joint selon la revendication 26, **caractérisé en ce que** ledit chanfrein présente une pente sensiblement continue par rapport à la direction longitudinale (A) et comprise entre environ 8° et environ 12°.

28. Joint selon l'une des revendications 1 à 27, **caractérisé en ce que** la deuxième surface externe (SE2) de la seconde lèvre (L2) présente initialement, au niveau de sa liaison avec ladite troisième surface de butée (SB3), une portion annulaire inclinée par rapport à ladite direction longitudinale (A) d'un angle compris entre environ 8° et environ 12°, et préférentiellement égal à environ 10°.

29. Joint selon l'une des revendications 1 à 28, **caractérisé en ce que** ledit premier élément tubulaire (EM) est muni d'une première surface externe SE1 bombée.

30. Joint selon l'une des revendications 1 à 29, **caractérisé en ce que** ledit second élément tubulaire appartient à un manchon de raccordement (M) sensiblement symétrique de type femelle/femelle et ledit premier élément tubulaire (EM) appartient à une extrémité d'un tube de grande longueur.

31. Joint selon la revendication 30, **caractérisé en ce que** ledit manchon (M) comporte une partie centrale (PCM) prolongée de part et d'autre par deux seconds éléments tubulaires (EF1, EF2) et initialement munie sur une surface externe d'une zone annulaire (G2) présentant une sous-épaisseur choisie de sorte que la section initiale dudit manchon (M) au niveau de cette zone (G2) soit supérieure ou égale au produit de la section d'une partie courante des tubes (T1, T2), aux extrémités desquels sont formés lesdits premiers éléments tubulaires (EM), par l'efficacité du joint, c'est-à-dire par le rapport entre la section critique des éléments filetés et la section de tube (T1, T2).

32. Procédé de réalisation d'un joint tubulaire expansé, **caractérisé en ce qu'**il consiste, à partir d'un joint tubulaire expansible selon l'une des revendications précédentes,
- à visser lesdits premier (EM) et second (EF) éléments tubulaires jusqu'à ce que la deuxième surface de butée (SB2) s'appuie contre la troisième surface de butée (SB3) et/ou que la première surface de butée (SB1) s'appuie contre la quatrième surface de butée (SB4), et que ladite première lèvre (L1) soit logée dans ledit logement annulaire (LO), et
- à faire subir audit joint tubulaire expansible une expansion diamétrale dans le domaine de la déformation plastique, de manière à définir au niveau de ladite première surface externe (SE1) un épaulement annulaire (EP) présentant une partie au moins de la conformation de la gorge (G1) et en contact serrant et étanche avec celle-ci.

33. Procédé selon la revendication 32, **caractérisé en ce que** ladite expansion définit un autre contact serrant et étanche entre une partie d'extrémité interne de ladite première lèvre (L1) et ladite deuxième surface externe (SE2).

34. Procédé selon l'une des revendications 32 et 33, **caractérisé en ce que** ledit vissage contraint tout d'abord ladite première surface de butée (SB 1) à s'appuyer contre ladite quatrième surface de butée (SB4) de manière à provoquer une mise en compression axiale de ladite première lèvre (L1) dans le domaine des déformations élastiques.

35. Procédé selon l'une des revendications 32 à 34, **caractérisé en ce que** l'on effectue ledit vissage jusqu'à ce que ladite première surface de butée (SB1) s'appuie contre ladite quatrième surface de butée (SB4), puis que ladite deuxième surface de butée (SB2) s'appuie contre ladite troisième surface de butée (SB3).

36. Procédé selon l'une des revendications 32 à 35, **caractérisé en ce que** l'expansion radiale du joint est réalisée selon un taux d'expansion au moins égal à 10%.

## Patentansprüche

1. Expandierbare Rohrverbindung, die einerseits ein erstes Rohrelement (EM), das einen ersten Bereich (P1), der mit einem Außengewinde (FM) versehen ist, und einen zweiten Bereich (P2) aufweist, der den ersten Bereich verlängert und i) eine erste Außenfläche (SE1), ii) eine erste ringförmige Lippe (L1), die eine erste axiale Anschlagfläche (SB1) und eine erste Innenfläche (SI1) hat und von der ersten Außenfläche (SE1) über einen Teil von deren axialer Länge begrenzt wird, und iii) eine zweite Anschlagfläche (SB2) enthält, und andererseits ein zweites Rohrelement (EF) enthält, das i) ein Innengewinde (FF) entsprechend dem Außengewinde (FM) und auf dieses geschraubt, ii) eine zweite ringförmige Lippe (L2), die eine dritte Anschlagfläche (SB3), eine zweite Außenfläche (SE2), die gegenüber der ersten Innenfläche (SI1) angeordnet ist, und eine zweite Innenfläche (S2) hat, iii) eine vierte axiale Anschlagfläche (SB4) und iv) eine dritte Innenfläche (SI3) aufweist, die sich zwischen der vierten axialen Anschlagfläche (SB4) und dem Innengewinde (FF) erstreckt und mit der zweiten Außenfläche (SE2) und der vierten Anschlagfläche (SB4) eine ringförmige Aufnahme (LO) entsprechend der ersten Lippe (L1) definiert, derart, dass das erste Rohrelement (EM) eine gewählte lokale ringförmige Verdickung (SA1) in der Region von einer vierten Innenfläche (SI4) aufweist, die die zweite Anschlagfläche (SB2) verlängert, wobei die ringförmige Verdickung (SA1) zum inneren der Rohrverbindung gerichtet ist, dass das zweite Rohrelement (EF) an einer gewählten Stelle seiner dritten Innenfläche (SI3) eine innere Ringnut (G1) aufweist, die im Wesentlichen in Höhe von der ersten Außenfläche (SE1) und der ringförmigen Verdickung (SA1) angeordnet ist, und das erste (EM) und das zweite (EF) Rohrelement so gestaltet sind, dass die erste Lippe (L1) in der ringförmigen Aufnahme (LO) angeordnet ist und die zweite Anschlagfläche (SB2) sich gegen die dritte Anschlagfläche (SB3) drückt und/oder die erste Anschlagfläche (SB1) sich gegen die vierte Anschlagfläche (SB4) drückt, um bei einer diametralen Expansion auf dem Gebiet der plastischen Verformung, die später an der expandierbare Rohrverbindung durchgeführt wird, die Erzeugung einer Ringschulter (EP) in dem Bereich von der ersten Außenfläche (SE1) zu ermöglichen, die mindestens einen Teil der Gestaltung der Nut (G1) aufweist und mit dieser in dichtem Anpresskontakt ist.

2. Verbindung nach Anspruch 1, **dadurch gekennzeichnet, dass** das erste (EM) und das zweite (EF) Rohrelement so gestaltet sind, dass nach der Expansion ein weiterer dichter Anpresskontakt zwischen einem inneren Endbereich der ersten Lippe (L1) und der zweiten Außenfläche (SE2) definiert wird.

3. Verbindung nach einem der Ansprüche 1 und 2, **dadurch gekennzeichnet, dass** das erste Rohrelement (EM) anfangs eine lokale ringförmige Verdickung (SA1) aufweist, die in Richtung der zweiten Anschlagfläche (SB2) zunimmt.

4. Verbindung nach Anspruch 3, **dadurch gekennzeichnet, dass** die lokale ringförmige Verdickung (SA1) im Wesentlichen kontinuierlich gemäß einer Neigung zunimmt, die zwischen etwa 5° und etwa 30° und vorzugsweise zwischen etwa 10° und etwa 20° liegt.

5. Verbindung nach einem der Ansprüche 1 bis 4, **dadurch gekennzeichnet, dass** das erste Rohrelement (EM) anfangs in dem Bereich von seines ersten Bereichs (P1) auf seiner dem Außengewinde (FM) entgegengesetzten Innenfläche eine kegelförmige Querschnittsverminderung aufweist, in der ein lokaler ringförmiger Absatz (DC2) definiert ist.

6. Verbindung nach Anspruch 5, **dadurch gekennzeichnet, dass** die Querschnittsverminderung im Wesentlichen kontinuierlich gemäß einer Neigung bezüglich der Längsrichtung (A) zunimmt, die zwischen etwa 2° und etwa 20° liegt.

7. Verbindung nach einem der Ansprüche 1 bis 6, **dadurch gekennzeichnet, dass** die maximale Verdickung (SA1) des zweiten Bereichs (P2) anfangs geringer als ein in Abhängigkeit von einem Durchmesser eines Eintreibdorns gewählter Wert ist.

8. Verbindung nach einem der Ansprüche 1 bis 7, **dadurch gekennzeichnet, dass** die zweite Innenfläche (SI2) der zweiten Lippe (L2) anfangs eine gewählte lokale ringförmige Verdickung (SA2) in einer der dritten Anschlagfläche (SB3) benachbarten Zone aufweist, um bei der Expansion die Verformung der ersten Lippe (L1) in Richtung der Nut (G1) zu vergrößern.

9. Verbindung nach Anspruch 8, **dadurch gekennzeichnet, dass** die Verdickung (SA2) der zweiten Lippe (L2) geringer ist als die Verdickung (SA1) des ersten Rohrelements.

10. Verbindung nach einem der Ansprüche 8 und 9, **dadurch gekennzeichnet, dass** die Verdickung (SA2) der zweiten Lippe (L2) anfangs geringer ist als ein Wert, der in Abhängigkeit von einem Durchmesser eines Eintreibdorns gewählt wird.

11. Verbindung nach einem der Ansprüche 1 bis 10, **dadurch gekennzeichnet, dass** das zweite Rohrelement (EF) anfangs ein Verhältnis zwischen der Ausdehnung (PR) seiner zweiten Lippe (L2) in Längsrichtung und der Ausdehnung (H) seiner Aufnahme (LO) in einer Querebene hat, das zwischen etwa 1 und etwa 3, und vorzugsweise zwischen etwa 1,2 und etwa 1,6 liegt.

12. Verbindung nach einem der Ansprüche 1 bis 11, **dadurch gekennzeichnet, dass** die Nut (G1) anfangs mindestens zwei gekrümmte Abschnitte (C1, C2) aufweist.

13. Verbindung nach Anspruch 12, **dadurch gekennzeichnet, dass** die gekrümmten Abschnitte (C1, C2) anfangs im Wesentlichen gleiche Krümmungsradien aufweisen.

14. Verbindung nach Anspruch 13, **dadurch gekennzeichnet, dass** der Krümmungsradius anfangs zwischen etwa 2 mm und etwa 20 mm liegt.

15. Verbindung nach einem der Ansprüche 12 bis 14, **dadurch gekennzeichnet, dass** die zwei gekrümmten Abschnitte (C1, C2) von einem im Wesentlichen zylindrischen zentralen Bereich (PC) getrennt werden.

16. Verbindung nach einem der Ansprüche 12 bis 15, **dadurch gekennzeichnet, dass** mindestens eines der Rohrelemente (EM, EF) zu einem Rohr großer Länge (T1, T2) gehört, und dass die Nut (G1) anfangs eine radiale Tiefe (H') hat, deren maximaler Wert so gewählt wird, dass der Materialquerschnitt am Boden der Nut (G1) größer ist als das Produkt aus dem geringsten Querschnitt eines laufenden Bereichs des Rohrs oder der Rohre (T1, T2) und dem Zugwirkungsgrad der Verbindung, d.h. dem Verhältnis zwischen dem kritischen Querschnitt der Gewindeelemente und dem Rohrquerschnitt (T1, T2).

17. Verbindung nach einem der Ansprüche 1 bis 16, **dadurch gekennzeichnet, dass** das Außengewinde (FM) und das Innengewinde (FF) aus einer Gruppe ausgewählt werden, die die Gewinde vom kegelförmigen und vom zylindrischen Typ enthält, und je über mindestens einen Rohrelementabschnitt (EM, EF) geformt sind.

18. Verbindung nach einem der Ansprüche 1 bis 17, **dadurch gekennzeichnet, dass** das erste (EM) und das zweite (EF) Rohrelement so gestaltet sind, dass nach dem Schraubvorgang die erste Lippe (L1) axial auf dem Gebiet der elastischen Verformungen komprimiert ist.

19. Verbindung nach einem der Ansprüche 1 bis 18, **dadurch gekennzeichnet, dass** das erste (EM) und das zweite (EF) Rohrelement so gestaltet sind, dass während des Schraubvorgangs die erste Anschlagfläche (SB1) sich gegen die vierte Anschlagfläche (SB4) drückt, dann die zweite Anschlagfläche (SB2) sich gegen die dritte Anschlagfläche (SB3) drückt.

20. Verbindung nach Anspruch 19, **dadurch gekennzeichnet, dass** die zweite (SB2) und die dritte (SB3) Anschlagfläche anfangs eine konvexe bzw. eine konkave kegelförmige Fläche mit im Wesentlichen gleichen Neigungen bezüglich einer Querebene zur Längsrichtung (A) haben, um einen dichten Anpresskontakt zwischen der ersten Innenfläche (SI1) und der zweiten Außenfläche (SE2) nach dem Schraubvorgang und vor der Expansion zu ermöglichen.

21. Verbindung nach Anspruch 20, **dadurch gekennzeichnet, dass** die Neigungen anfangs zwischen etwa +5° und etwa +30° liegen.

22. Verbindung nach einem der Ansprüche 1 bis 21, **dadurch gekennzeichnet, dass** die erste Innenfläche (SI1) der ersten Lippe (L1) anfangs bezüglich der Längsrichtung (A) um einen Winkel geneigt ist, der zwischen etwa 0,1° und etwa 15° liegt.

23. Verbindung nach einem der Ansprüche 1 bis 22, **dadurch gekennzeichnet, dass** das Außengewinde (FM) und das Innengewinde (FF) anfangs Gewindegänge aufweisen, die mit einer Tragflanke versehen sind, welche einen negativen Winkel zwischen etwa -3° und etwa -15° hat.

24. Verbindung nach einem der Ansprüche 1 bis 23, **dadurch gekennzeichnet, dass** das Außengewinde (FM) und das Innengewinde (FF) anfangs Gewindegänge aufweisen, die mit einer Eingriffsflanke versehen sind, welche einen positiven Winkel zwischen etwa +10° und etwa +30° hat.

25. Verbindung nach Anspruch 24, **dadurch gekennzeichnet, dass** das Außengewinde (FM) und das Innengewinde (FF) nach dem Schraubvorgang und vor der Expansion ein axiales Spiel zwischen ihren Eingriffsflanken haben, das zwischen etwa 0,05 mm und etwa 0,3 mm liegt.

26. Verbindung nach einem der Ansprüche 1 bis 25, **dadurch gekennzeichnet, dass** das erste Rohrelement (EM) anfangs in dem Bereich von seiner ersten Außenfläche (SE1) und vor seinem ersten Bereich (P1) eine kegelförmige Abschrägung aufweist, die einen lokalen ringförmigen Absatz (DC1) nach innen definiert.

27. Verbindung nach Anspruch 26, **dadurch gekennzeichnet, dass** die Abschrägung eine Neigung hat, die im Wesentlichen kontinuierlich bezüglich der Längsrichtung (A) ist und zwischen etwa 8° und etwa 12° liegt.

28. Verbindung nach einem der Ansprüche 1 bis 27, **dadurch gekennzeichnet, dass** die zweite Außenfläche (SE2) der zweiten Lippe (L2) anfangs in dem Bereich von ihrer Verbindung mit der dritten Anschlagfläche (SB3) einen bezüglich der Längsrichtung (A) um einen Winkel geneigten ringförmigen Abschnitt aufweist, der zwischen etwa 8° und etwa 12° liegt und vorzugsweise gleich etwa 10° ist.

29. Verbindung nach einem der Ansprüche 1 bis 28, **dadurch gekennzeichnet, dass** das erste Rohrelement (EM) mit einer gewölbten ersten Außenfläche (SE1) versehen ist.

30. Verbindung nach einem der Ansprüche 1 bis 29, **dadurch gekennzeichnet, dass** das zweite Rohrelement zu einer im Wesentlichen symmetrischen Anschlussmuffe (M) vom Typ Aufnahme/Aufnahme gehört und das erste Rohrelement (EM) zu einem Ende eines Rohrs großer Länge gehört.

31. Verbindung nach Anspruch 30, **dadurch gekennzeichnet, dass** die Muffe (M) einen zentralen Bereich (PCM) aufweist, der zu beiden Seiten von zwei zweiten Rohrelementen (EFI, EF2) verlängert wird und anfangs auf einer Außenfläche mit einer Ringzone (G2) versehen ist, die eine Verdünnung aufweist, die so gewählt ist, dass der Anfangsquerschnitt der Muffe (M) in dem Bereich von dieser Zone (G2) größer als das oder gleich dem Produkt aus dem Querschnitt eines laufenden Bereichs der Rohre (T1, T2), an deren Enden die ersten Rohrelemente (EM) gebildet sind, mit dem Wirkungsgrad der Verbindung, d.h dem Verhältnis zwischen dem kritischen Querschnitt der Gewindeelemente und dem Rohrquerschnitt (T1, T2), ist.

32. Verfahren zur Herstellung einer expandierten Rohrverbindung, **dadurch gekennzeichnet, dass** es ausgehend von einer expandierbaren Rohrverbindung nach einem der vorhergehenden Ansprüche darin besteht:
- das erste (EM) und das zweite (EF) Rohrelement zu verschrauben, bis die zweite Anschlagfläche (SB2) sich gegen die dritte Anschlagfläche (SB3) drückt und/oder bis die erste Anschlagfläche (SB1) sich gegen die vierte Anschlagfläche (SB4) drückt, und bis die erste Lippe (L1) in der ringförmigen Aufnahme (LO) angeordnet ist, und
- die expandierbare Rohrverbindung einer diametralen Expansion auf dem Gebiet der plastischen Verformung zu unterziehen, um in dem Bereich von der ersten Außenfläche (SE1) eine ringförmige Schulter (EP) zu definieren, die mindestens einen Teil der Gestaltung der Nut (G1) aufweist und in dichtem Anpresskontakt mit dieser ist.

33. Verfahren nach Anspruch 32, **dadurch gekennzeichnet, dass** die Expansion einen weiteren dichten Anpresskontakt zwischen einem inneren Endbereich der ersten Lippe (L1) und der zweiten Außenfläche (SE2) definiert.

34. Verfahren nach einem der Ansprüche 32 und 33, **dadurch gekennzeichnet, dass** der Schraubvorgang zunächst die erste Anschlagfläche (SB1) zwingt, sich gegen die vierte Anschlagfläche (SB4) zu drücken, um eine axiale Kompression der ersten Lippe (L1) auf dem Gebiet der elastischen Verformungen zu bewirken.

35. Verfahren nach einem der Ansprüche 32 bis 34, **dadurch gekennzeichnet, dass** der Schraubvorgang durchgeführt wird, bis die erste Anschlagfläche (SB1) sich gegen die vierte Anschlagfläche (SB4) drückt, dann die zweite Anschlagfläche (SB2) sich gegen die dritte Anschlagfläche (SB3) drückt.

36. Verfahren nach einem der Ansprüche 32 bis 35, **dadurch gekennzeichnet, dass** die radiale Expansion der Verbindung gemäß einem Expansionsgrad mindestens gleich 10 % durchgeführt wird.

## Claims

1. Expandable tubular joint comprising, on the one hand, a first tubular element (EM) comprising a first part (P1), provided with a male thread (FM), and a second part (P2) extending said first part and comprising i) a first outer surface (SE1), ii) a first annular lip (L1) having a first axial abutment surface (SB1) and a first inner surface (SI1) and delimited by said first outer surface (SE1) over a part of the axial length thereof, and iii) a second abutment surface (SB2), and, on the other hand, a second tubular element (EF) comprising i) a female thread (FF), matching the male thread (FM) and screwed thereto, ii) a second annular lip (L2) having a third abutment surface (SB3), a second outer surface (SE2), arranged to face said first inner surface (SI1), and a second inner surface (SI2), iii) a fourth axial abutment surface (SB4), and iv) a third inner surface (SI3) extending between said fourth axial abutment surface (SB4) and said female thread (FF) and defining with said second outer surface (SE2) and fourth abutment surface (SB4) an annular recess (LO) matching said first lip (L1), so that said first tubular element (EM) comprises a selected local annular added thickness (SA1) in the region of a fourth inner surface (SI4) extending the second abutment surface (SB2), said annular added thickness (SA1) being directed towards the interior of the joint, said second tubular element (EF) comprises, at a selected location of its third inner surface (SI3), an inner annular groove (G1) arranged substantially in the region of said first outer surface (SE1) and of said annular added thickness (SA1), so that said first (EM) and second (EF) tubular elements are shaped in such a way that said first lip (L1) is accommodated in said annular recess (LO), and said second abutment surface (SB2) bears against said third abutment surface (SB3) and/or said first abutment surface (SB1) bears against said fourth abutment surface (SB4) so as to allow, during a diametral expansion in the plastic deformation region subsequently carried out on the expandable tubular joint, the formation, in the region of said first outer surface (SE1), of an annular shoulder (EP) having at least a part of the shape of the groove (G1) and being in sealing interference contact therewith.

2. Joint according to claim 1, **characterised in that** said first (EM) and second (EF) tubular elements are shaped in such a way that, after said expansion, another sealing interference contact is defined between an inner end part of said first lip (L1) and said second outer surface (SE2).

3. Joint according to either claim 1 or claim 2, **characterised in that** said first tubular element (EM) initially has a local annular added thickness (SA1) increasing in the direction of said second abutment surface (SB2).

4. Joint according to claim 3, **characterised in that** said local annular added thickness (SA1) increases substantially continuously at a slope between approximately 5° and approximately 30° and preferably between approximately 10° and approximately 20°.

5. Joint according to any one of claims 1 to 4, **characterised in that** said first tubular element (EM) initially has in the region of its first portion (P1), over its inner surface opposing said male thread (FM), a conical inward swage in which is defined a local annular set-back (DC2).

6. Joint according to claim 5, **characterised in that** said inward swage grows substantially continuously at a slope with respect to the longitudinal direction (A) of between approximately 2° and approximately 20°.

7. Joint according to any one of claims 1 to 6, **characterised in that** said maximum added thickness (SA1) of the second portion (P2) is initially less than a value selected as a function of a diameter of a drift.

8. Joint according to any one of claims 1 to 7, **characterised in that** said second inner surface (SI2) of the second lip (L2) initially has a selected local annular added thickness (SA2) in a zone adjacent to said third abutment surface (SB3), so as to increase the deformation of said first lip (L1) in the direction of said groove (G1) during the expansion.

9. Joint according to claim 8, **characterised in that** said added thickness (SA2) of the second lip (L2) is less than the added thickness (SA1) of the first tubular element.

10. Joint according to either claim 8 or claim 9, **characterised in that** said added thickness (SA2) of the second lip (L2) is initially less than a value selected as a function of a diameter of a drift.

11. Joint according to any one of claims 1 to 10, **characterised in that** said second tubular element (EF) initially has a ratio between the extension (PR) of its second lip (L2) in the longitudinal direction and the extension (H) of its recess (LO) in a transverse plane of between approximately 1 and approximately 3 and preferably between approximately 1.2 and approximately 1.6.

12. Joint according to any one of claims 1 to 11, **characterised in that** said groove (G1) initially comprises at least two curvilinear portions (C1, C2).

13. Joint according to claim 12, **characterised in that** said curvilinear portions (C1, C2) initially have substantially identical radii of curvature.

14. Joint according to claims 13, **characterised in that** said radius of curvature is initially between approximately 2 mm and approximately 20 mm.

15. Joint according to any one of claims 12 to 14, **characterised in that** the two curvilinear portions (C1, C2) are separated by a substantially cylindrical central portion (PC).

16. Joint according to any one of claims 12 to 15, **characterised in that** at least one of the tubular elements (EM, EF) forms part of a great length tube (T1, T2) and **in that** said groove (G1) initially has a radial depth (H'), the maximum value of which is selected such that the material section at the bottom of the groove (G1) is greater than the product of the smallest section of a common portion of said tube or tubes (T1, T2), and the efficiency of the joint under tension that is to say the ratio between the critical section of the threaded elements and the tube section (T1, T2).

17. Joint according to any one of claims 1 to 16, **characterised in that** said male (FM) and female (FF) threads are selected from a group consisting of conical-type and cylindrical-type threads and are each formed over at least one tubular element portion (EM, EF).

18. Joint according to any one of claims 1 to 17, **characterised in that** said first (EM) and second (EF) tubular elements are shaped in such a way that, after screwing, said first lip (L1) is axially compressed in the elastic deformation region.

19. Joint according to any one of claims 1 to 18, **characterised in that** said first (EM) and second (EF) tubular elements are shaped in such a way that, during said screwing, said first abutment surface (SB1) bears against said fourth abutment surface (SB4), then said second abutment surface (SB2) bears against said third abutment surface (SB3).

20. Joint according to claim 19, **characterised in that** said second (SB2) and third (SB3) abutment surfaces initially have convex and concave conical surfaces respectively, having substantially identical inclinations with respect to a plane transverse to the longitudinal direction (A) so as to allow a sealing interference contact between said first inner surface (SI1) and said second outer surface (SE2) after said screwing and prior to said expansion.

21. Joint according to claim 20, **characterised in that** said inclinations are initially between approximately +5° and approximately +30°.

22. Joint according to any one of claims 1 to 21, **characterised in that** said first inner surface (SI1) of the first lip (L1) is initially inclined with respect to said longitudinal direction (A) by an angle of between approximately 0.1° and approximately 15°.

23. Joint according to any one of claims 1 to 22, **characterised in that** said male (FM) and female (FF) threads initially comprise threads provided with a load flank having a negative angle of between approximately -3° and approximately -15°.

24. Joint according to any one of claims 1 to 23, **characterised in that** said male (FM) and female (FF) threads initially comprise threads provided with a stabbing flank having a positive angle of between approximately +10° and approximately +30°.

25. Joint according to claim 24, **characterised in that** said male (FM) and female (FF) threads have, after screwing and prior to expansion, an axial clearance between their stabbing flanks of between approximately 0.05 mm and approximately 0.3 mm.

26. Joint according to any one of claims 1 to 25, **characterised in that** said first tubular element (EM) initially has, in the region of its first outer surface (SE1) and before its first portion (P1), a conical chamfer defining a local annular set-back (DC1) toward the interior.

27. Joint according to claim 26, **characterised in that** said chamfer has a substantially continuous slope with respect to the longitudinal direction (A) of between approximately 8° and approximately 12°.

28. Joint according to any one of claims 1 to 27, **characterised in that** the second outer surface (SE2) of the second lip (L2) initially has, in the region of its connection to said third abutment surface (SB3), an annular portion inclined with respect to said longitudinal direction (A) by an angle of between approximately 8° and approximately 12° and preferably equal to approximately 10°.

29. Joint according to any one of claims 1 to 28, **characterised in that** said first tubular element (EM) is provided with a first rounded outer surface (SE1).

30. Joint according to any one of claims 1 to 29, **characterised in that** said second tubular element forms part of a substantially symmetrical female/female-type connection sleeve (M) and said first tubular element (EM) forms part of an end of a great length tube.

31. Joint according to claim 30, **characterised in that** said sleeve (M) comprises a central portion (PCM) extended on either side by two second tubular elements (EF1, EF2) and initially provided, over an outer surface, with an annular zone (G2) having a reduced thickness selected such that the initial section of said sleeve (M) in the region of this zone (G2) is greater than or equal to the product of the section of a common portion of the tubes (T1, T2), at the ends of which are formed said first tubular elements (EM), and the efficiency of the joint, that is to say the ratio between the critical section of the threaded elements and the tube section (T1, T2).

32. Method for producing an expanded tubular joint, **characterised in that** it consists, based on an expandable tubular joint according to any one of the preceding claims,
- in screwing said first (EM) and second (EF) tubular elements until the second abutment surface (SB2) bears against the third abutment surface (SB3) and/or the first abutment surface (SB1) bears against the fourth abutment surface (SB4) and said first lip (L1) is accommodated in said annular recess (LO), and
- in subjecting said expandable tubular joint to a diametral expansion in the plastic deformation region, so as to define, in the region of said first outer surface (SE1), an annular shoulder (EP) having at least a portion of the shape of the groove (G1) and being in sealing interference contact therewith.

33. Method according to claim 32, **characterised in that** said expansion defines another sealing interference contact between an inner end portion of said first lip (L1) and said second outer surface (SE2).

34. Method according to either claim 32 or claim 33, **characterised in that** said screwing firstly forces said first abutment surface (SB1) to bear against said fourth abutment surface (SB4) so as to cause said first lip (L1) to be subjected to axial compression in the elastic deformation region.

35. Method according to any one of claims 32 to 34, **characterised in that** said screwing is carried out until said first abutment surface (SB1) bears against said fourth abutment surface (SB4), then until said second abutment surface (SB2) bears against said third abutment surface (SB3).

36. Method according to any one of claims 32 to 35, **characterised in that** the radial expansion of the joint takes place at an expansion rate at least equal to 10%.
